(19) Europäisches Patentamt
European Patent Office
Office européen des brevets

(11) EP 2 708 379 A1

(12) **EUROPEAN PATENT APPLICATION**
published in accordance with Art. 153(4) EPC

(43) Date of publication:
**19.03.2014 Bulletin 2014/12**

(21) Application number: **12786784.4**

(22) Date of filing: **06.03.2012**

(51) Int Cl.:
***B60C 5/14*** *(2006.01)*

(86) International application number:
**PCT/JP2012/055688**

(87) International publication number:
**WO 2012/157322 (22.11.2012 Gazette 2012/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2011 JP 2011108477**
**23.05.2011 JP 2011114613**
**14.06.2011 JP 2011132213**
**29.08.2011 JP 2011185687**

(71) Applicant: **Sumitomo Rubber Industries, Ltd.**
**Kobe-shi, Hyogo 651-0072 (JP)**

(72) Inventor: **IIZUKA, Toru**
**Kobe-shi**
**Hyogo 651-0072 (JP)**

(74) Representative: **Manitz, Finsterwald & Partner GbR**
**Martin-Greif-Strasse 1**
**80336 München (DE)**

(54) **PNEUMATIC TIRE**

(57) There is provided a pneumatic tire including an inner liner provided therein to improve air permeability resistance, flection fatigue resistance, and cracking resistance. In the pneumatic tire including the inner liner provided therein, the inner liner is formed of at least one polymer sheet containing a styrene-isobutylene-styrene triblock copolymer, and an average thickness Gs of a buttress region Rs is smaller than an average thickness Gb of a bead region Rb, the buttress region Rs extending from a tire maximum width position to a corresponding position Lu of a belt layer end, the bead region Rb extending from the tire maximum width position to a bead toe.

FIG.1

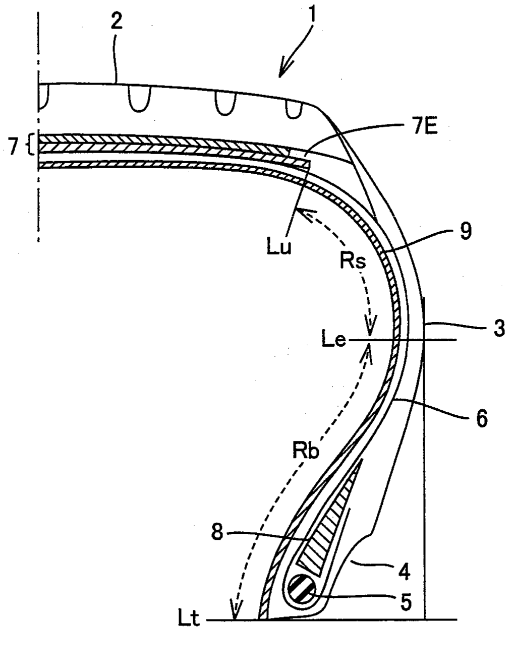


EP 2 708 379 A1

## Description

TECHNICAL FIELD

The present invention relates to a pneumatic tire including an inner liner.

BACKGROUND ART

In recent years, in response to strong social demands for low fuel consumption of vehicles, weight reduction of tires has been sought. Among tire members, weight reduction and the like of an inner liner also have begun. The inner liner is disposed radially inwardly in a tire, and serves to improve air permeability resistance by reducing an amount of leakage of air from inside to outside of the pneumatic tire.

Currently, a butyl-based rubber containing 70 mass % to 100 mass % of a butyl rubber and 30 mass % to 0 mass % of a natural rubber is employed as a rubber composition for such an inner liner, so as to improve air permeability resistance of the tire. In addition to butylene, the butyl-based rubber contains approximately 1 mass % of isoprene, which acts with sulfur, vulcanization accelerator, and zinc white to achieve cross-linking with an adjacent rubber. In the case of normal blending, the above-described butyl-based rubber needs to have a thickness of 0.6 mm to 1.0 mm for a tire of a passenger car, and needs to have a thickness of approximately 1.0 mm to 2.0 mm for a tire of a truck/bus.

For weight reduction of such tires, it has been proposed to employ a thermoplastic elastomer for the inner liner. The thermoplastic elastomer is more excellent in air permeability resistance than the butyl-based rubber and can provide the inner liner layer with a thinner thickness. However, when the inner liner employing the thermoplastic elastomer is provided with a thickness thinner than that of the butyl-based rubber, air permeability and weight reduction cannot be achieved at the same time, and the strength of the inner liner is decreased, with the result that the inner liner may be broken due to heat and pressure of a bladder during a vulcanization step. Moreover, in the thermoplastic elastomer, which has relatively low strength, cracks are likely to be formed in the inner liner at a buttress portion, which is repeatedly sheared and deformed particularly greatly during traveling with the tire, disadvantageously.

Patent Document 1 (Japanese Patent Laying-Open No. 9-19987) discloses a layer stack for improving adhesion between the inner liner and the rubber layer. By providing adhesive layers on both sides of the inner liner, the adhesive layers are brought into contact with each other at an overlapping portion of the inner liner. Accordingly, they are firmly adhered to each other by heating, thus improving air pressure retention property. However, the adhesive layers for the overlapping of the inner liner are brought into contact with the bladder during a vulcanization step under heating, with the result that the adhesive layers stick to and are adhered to the bladder, disadvantageously.

In Patent Document 2 (Japanese Patent No. 2999188), a mixture of a nylon resin and an isobutylene-isoprene rubber, each of which has an excellent air permeability resistance, is formed by dynamic cross-linking, thereby fabricating an inner liner having a thickness of 100 $\mu$m. However, the nylon resin is hard at a room temperature, and is therefore not suitable as an inner liner for a tire. Further, only by the mixture resulting from the dynamic cross-linking, vulcanization adhesion with a rubber layer is not attained. Hence, an adhesive layer for vulcanization is required apart from that for the inner liner. This results in a complicated structure as an inner liner member as well as increased number of steps. Thus, this is disadvantageous in terms of productivity.

In Patent Document 3 (Japanese Patent Laying-Open No. 2008-24219), a flexible gas barrier layer is fabricated by dispersing a maleic anhydride modified hydrogenated styrene-ethylene-butadiene-styrene block copolymer in an ethylene-vinyl alcohol copolymer having an excellent air permeability resistance. Moreover, a sandwich structure is fabricated by sandwiching it between thermoplastic polyurethane layers, and a rubber cement (obtained by dissolving a butyl rubber and a natural rubber at 70/30 in toluene) is applied onto the surface thereof to be adhered to the tire rubber, thereby forming an inner liner. However, the modified ethylene-vinyl alcohol copolymer having the flexible resin dispersed therein has a low adhesive strength, and may be detached from the thermoplastic polyurethane layer. Moreover, in the modified ethylene-vinyl alcohol copolymer having the flexible resin dispersed therein, the EVOH of the matrix is poor in flection fatigue resistance, thus resulting in breakage during traveling with the tire. For the application of the rubber cement to the surface to be adhered to the tire rubber, a step different from the normal inner liner step is required, resulting in poor productivity.

Patent Document 4 (Japanese Patent Laying-Open No. 2007-291256) proposes a pneumatic tire employing the following rubber composition for an inner liner layer, as a pneumatic tire capable of simultaneously achieving suppression of decrease of air pressure, improvement of durability, and improvement of fuel consumption. The rubber composition at least contains 15 parts by mass to 30 parts by mass of an ethylene-vinyl alcohol copolymer, expressed by the following general formula (I), relative to 100 parts by mass of a rubber component composed of a natural rubber and/or a synthetic rubber:

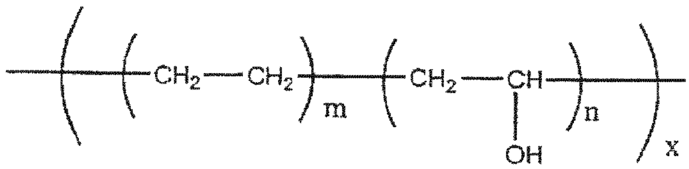

(I)

where m and n are 1 to 100 independently and x is 1 to 1000. In the technique of Patent Document 4, a rubber sheet employing this rubber composition has a thickness of 1 mm, which provides room for improvement in terms of weight reduction of tires.

Patent Document 5 (Japanese Patent Laying-Open No. 2008-174037) proposes to improve flection resistance in a pneumatic tire having an air permeation preventing layer inside a carcass layer. The air permeation preventing layer is of a thermoplastic resin or a thermoplastic elastomer composition containing the thermoplastic resin and an elastomer. The flection resistance is improved by configuring such that an average thickness Gs of the air permeation prevention layer at a tire maximum width region Ts from the vicinity of a maximum width end of a belt layer becomes thinner than an average thickness Gf of the air permeation preventing layer at the tire maximum width and a region Tf of a bead toe. However, this configuration may cause detachment between a rubber layer of a carcass ply and the air permeation preventing layer.

CITATION LIST

PATENT DOCUMENT

PTD 1: Japanese Patent Laying-Open No. 9-19987
PTD 2: Japanese Patent No. 2999188
PTD 3: Japanese Patent Laying-Open No. 2008-24219
PTD 4: Japanese Patent Laying-Open No. 2007-291256
PTD 5: Japanese Patent Laying-Open No. 2008-174037

SUMMARY OF INVENTION

TECHNICAL PROBLEM

The present invention has an object to provide a pneumatic tire including an inner liner to improve air permeability resistance, flection fatigue resistance, and cracking resistance.

SOLUTION TO PROBLEM

The present invention relates to a pneumatic tire including an inner liner provided therein. The inner liner is formed of at least one polymer sheet containing a styrene-isobutylene-styrene triblock copolymer, and an average thickness Gs of a buttress region Rs is smaller than an average thickness Gb of a bead region Rb, the buttress region Rs extending from a tire maximum width position to a corresponding position Lu of a belt layer end, the bead region Rb extending from the tire maximum width position to a bead toe.

In a pneumatic tire of the present invention including an inner liner provided therein, the inner liner is formed of a polymer sheet composed of a polymer mixture containing 99.5 mass % to 60 mass % of a styrene-isobutylene-styrene triblock copolymer and 0.5 mass % to 40 mass % of a styrene-maleic anhydride copolymer, and a ratio (Gs/Gb) is 0.3 to 0.75 between an average thickness Gs of a buttress region Rs and an average thickness Gb of a bead region Rb, the buttress region Rs extending from a tire maximum width position to a corresponding position Lu of a belt layer end, the bead region Rb extending from the tire maximum width position to a bead toe.

The styrene-isobutylene-styrene triblock copolymer preferably contains a styrene component in a range of 10 mass % to 30 mass %, and preferably has a weight average molecular weight of 50,000 to 400,000. Preferably, the styrene-maleic anhydride copolymer contains a styrene component and a maleic anhydride component at a molar ratio of 50/50 to 90/10, has a weight average molecular weight of 4,000 to 20,000, and further includes a styrene-maleic anhydride copolymer base resin in which the maleic anhydride component has an acid value of 50 to 600.

Preferably, the styrene-maleic anhydride copolymer includes an ester resin of the styrene-maleic anhydride copolymer, the ester resin having a monoester group and a monocarboxylic acid group and obtained by esterification

of the styrene-maleic anhydride copolymer base resin.

Preferably, the styrene-maleic anhydride copolymer includes a styrene-maleic anhydride copolymer ammonium salt aqueous solution in which the styrene-maleic anhydride copolymer base resin is dissolved to obtain an ammonium salt.

The average thickness Gs of the buttress region in the inner liner is preferably 0.05 mm to 0.45 mm.

Another embodiment of the present invention relates to a pneumatic tire including an inner liner provided therein, wherein the inner liner is formed of a polymer sheet of a thermoplastic elastomer composition containing 0.1 parts by mass to 100 parts by mass of a tackifier relative to 100 parts by mass of a styrene-isobutylene-styrene triblock copolymer, and a ratio (Gs/Gb) is 0.30 to 0.75 between an average thickness Gs of a buttress region Rs and an average thickness Gb of a bead region Rb in the inner liner, the buttress region Rs extending from a tire maximum width position to a corresponding position Lu of a belt layer end, the bead region Rb extending from the tire maximum width position to a bead toe.

Desirably, the styrene-isobutylene-styrene triblock copolymer contains a styrene component at a content of 10 mass % to 30 mass %, and has a weight average molecular weight of 50,000 to 400,000. Desirably, the tackifier has a weight average molecular weight Mw of $1 \times 10^2$ to $1 \times 10^6$, and has a softening point falling within a range of 50°C to 150°C.

Desirably, in the pneumatic tire of the present invention, the average thickness Gs of the buttress region Rs in the inner liner is 0.05 mm to 0.45 mm.

Another embodiment of the present invention is a pneumatic tire including an inner liner provided therein, wherein the inner liner is formed of a polymer layer stack, the polymer layer stack including: a first layer having a thickness of 0.05 mm to 0.6 mm and being a thermoplastic elastomer composition composed of a mixture of not less than 60 mass % of a styrene-isobutylene-styrene triblock copolymer and not more than 40 mass % of a C4 polymer, which is a polymer of monomers with carbon number 4; and a second layer having a thickness of 0.01 mm to 0.3 mm and being a thermoplastic elastomer composition composed of a mixture of not less than 60 mass % of at least one of the styrene-isoprene-styrene triblock copolymer and a styrene-isobutylene diblock copolymer and not more than 40 mass % of the C4 polymer, the second layer is disposed in contact with a rubber layer of a carcass ply, and an average thickness Gs of a buttress region Rs is thinner than an average thickness Gb of a bead region Rb in the inner liner, the buttress region Rs extending from a tire maximum width position to a corresponding position Lu of a belt layer end, the bead region Rb extending from the tire maximum width position to a bead toe.

Desirably, the styrene-isobutylene-styrene triblock copolymer contains a styrene component at a content of 10 mass % to 30 mass %, and has a weight average molecular weight of 50,000 to 400,000.

Preferably, the C4 polymer is polybutene or polyisobutylene. Preferably, the C4 polymer has a number average molecular weight of 300 to 3,000, has a weight average molecular weight of 700 to 100,000, or has a viscosity average molecular weight of 20,000 to 70,000.

Preferably, a ratio (Gs/Gb) is 0.30 to 0.75 between the average thickness Gs of the buttress region and the average thickness Gb of the bead region in the inner liner and the average thickness Gs of the buttress region in the inner liner is 0.05 mm to 0.45 mm.

Another embodiment of the present invention is a pneumatic tire including an inner liner provided therein, wherein the inner liner is formed of a polymer layer stack including: a first layer having a thickness of 0.05 mm to 0.6 mm and composed of a thermoplastic elastomer containing a styrene-isobutylene-styrene triblock copolymer; and a second layer having a thickness of 0.01 mm to 0.3 mm and composed of a thermoplastic elastomer containing an epoxidized styrene-butadiene-styrene triblock copolymer, the second layer being disposed in contact with a rubber layer of a carcass ply, and an average thickness Gs of a buttress region Rs is thinner than an average thickness Gb of a bead region Rb in the inner liner, the buttress region Rs extending from a tire maximum width position to a corresponding position Lu of a belt layer end, the bead region Rb extending from the tire maximum width position to a bead toe.

Desirably, a ratio (Gs/Gb) is 0.3 to 0.75 between the average thickness Gs of the buttress region and the average thickness Gb of the bead region in the inner liner. Desirably, the average thickness Gs of the buttress region in the inner liner is 0.05 mm to 0.45 mm.

## ADVANTAGEOUS EFFECTS OF INVENTION

According to the present invention, the inner liner is formed of the polymer sheet composed of the polymer mixture containing the SIBS and the styrene-maleic anhydride copolymer, and average thickness Gs of buttress region Rs extending from the tire maximum width position to corresponding position Lu of the belt layer end is made smaller than average thickness Gb of bead region Rb extending from the tire maximum width position to the bead toe, thereby improving air permeability resistance, flection fatigue resistance, and cracking resistance.

Further, in the present invention, the thermoplastic elastomer composition containing the tackifier is employed for the inner liner, and the ratio between average thickness Gb of bead region Rb and average thickness Gs of buttress region Rs in the inner liner is set to fall within a certain range, thereby attaining thinner thickness thereof while improving

air permeability resistance. Moreover, strength of adhesion with an adjacent rubber layer can be improved. Moreover, stress resulting from repeated deformation of the tire during traveling can be effectively released, thereby improving flection fatigue resistance and cracking resistance.

In still another embodiment of the invention, the layer stack of the thermoplastic elastomer compositions containing the C4 polymer is employed for the inner liner, thereby attaining thinner thickness thereof while improving air permeability resistance. Moreover, adhesion with an adjacent rubber layer can be improved. Further, average thickness Gb of bead region Rb and average thickness Gs of buttress region Rs in the inner liner are adjusted to effectively release stress resulting from repeated deformation of the tire during traveling, thereby improving flection fatigue resistance and cracking resistance.

In yet another embodiment of the invention, the polymer layer stack including the first layer containing the SIBS and the second layer of the epoxidized SBS is employed for the inner liner, thereby attaining thinner thickness thereof while maintaining air permeability resistance. Moreover, adhesion with an adjacent rubber layer can be improved. Thus, a pneumatic tire employing this polymer layer stack for its inner liner can be provided with improved flection fatigue resistance. Further, by adjusting average thickness Gb of bead region Rb and average thickness Gs of buttress region Rs in the inner liner, stress resulting from repeated deformation of the tire during traveling can be effectively released, thereby improving cracking resistance.

## BRIEF DESCRIPTION OF DRAWINGS

Fig. 1 is a schematic cross sectional view showing the right half of a pneumatic tire of the present invention.
Fig. 2 is a schematic cross sectional view of an inner liner of the pneumatic tire of the present invention.

## DESCRIPTION OF EMBODIMENTS

### (Basic Structure of Tire)

A pneumatic tire 1 of the present invention can be used for a passenger car, a truck/bus, a heavy machine, and the like. The following describes an embodiment of the pneumatic tire of the present invention with reference to Fig. 1. Fig. 1 is a schematic cross sectional view showing the right half of the pneumatic tire in one embodiment of the present invention. Pneumatic tire 1 includes a tread portion 2, and a sidewall portion 3 and bead portions 4 so as to form a shape of toroid from the opposite ends of the tread portion. In each of bead portions 4, a bead core 5 is embedded. Further, a carcass ply 6 and a belt layer 7 are disposed. Carcass ply 6 is provided to extend from one bead portion 4 to the other bead portion, and is anchored by folding its ends around bead cores 5. Belt layer 7, which is formed of at least two plies, is disposed outside a crown portion of carcass ply 6.

Belt layer 7 is disposed such that two plies, which are formed of cords such as steel cords or aramid fibers, are arranged to allow the cords to cross each other between the plies normally at an angle of 5° to 30° relative to the tire circumferential direction. It should be noted that topping rubber layers can be provided on the outer sides of the ends of the belt layer to reduce detachment in the ends of the belt layer. Further, in the carcass ply, organic fiber cords such as polyester, nylon, or aramid are arranged at substantially 90° relative to the tire circumferential direction. In a region surrounded by the carcass ply and its turning portion, a bead apex 8 is disposed to extend from the upper end of bead core 5 in the sidewall direction. Further, an inner liner 9 is disposed inwardly relative to carcass ply 6 in the tire radial direction, so as to extend from one bead portion 4 to the other bead portion 4.

A feature of the present invention lies in that an average thickness Gs of a buttress region Rs is smaller than an average thickness Gb of a bead region Rb in inner liner 9, buttress region Rs extending from a tire maximum width position Le to a corresponding position Lu of the belt layer end, bead region Rb extending from tire maximum width position Le to a bead toe Lt.

In the present invention, a ratio (Gs/Gb) is less than 1, preferably 0.3 to 0.75 between average thickness Gs of buttress region Rs and average thickness Gb of bead region Rb in inner liner 9, buttress region Rs extending from tire maximum width position Le to corresponding position Lu of the belt layer end, bead region Rb extending from tire maximum width position Le to bead toe Lt.

With the thickness of the inner liner being thinned in buttress region Rs, even if shearing deformation takes place due to repeated flection deformation in this region during traveling with the tire, resulting stress can be relaxed to prevent generation of cracks. Further, with the above-described average thicknesses in the inner liner, the stress resulting from the flection deformation can be relaxed effectively. The ratio (Gs/Gb) between average thickness Gs of buttress region Rs and average thickness Gb of bead region Rb in the inner liner is preferably 0.5 to 0.7. In order to attain an effect of relaxing stress in the buttress region while maintaining the air pressure retaining performance, average thickness

Gs of buttress region Rs in the inner liner is desirably 0.05 mm to 0.45mm.

<Embodiment A>

The present invention provides a pneumatic tire including an inner liner provided therein, wherein the inner liner is formed of a polymer sheet composed of a polymer mixture containing 99.5 mass % to 60 mass % of a styrene-isobutylene-styrene triblock copolymer (hereinafter, also referred to as "SIBS") and 0.5 mass % to 40 mass % of a styrene-maleic anhydride copolymer (hereinafter, also referred to as "SMA"). A polymer composition composed of the SIBS is poor in vulcanization adhesion with rubber, but is very excellent in air permeability resistance due to isobutylene block of the SIBS. Meanwhile, a styrene-maleic anhydride copolymer is poor in air permeability resistance, but is very excellent in vulcanization adhesion with a rubber. Hence, when a polymer film containing the SIBS and the SMA is used for the inner liner, there can be obtained a pneumatic tire excellent in air permeability resistance and vulcanization adhesion.

(Polymer Sheet)

In one embodiment of the present invention, the inner liner is formed of a polymer sheet composed of the polymer mixture containing 99.5 mass % to 60 mass % of the styrene-isobutylene-styrene triblock copolymer and 0.5 mass % to 40 mass % of the styrene-maleic anhydride copolymer.

Further, the molecular structure of the SIBS is completely saturated except aromatic side chain, so that the SIBS is suppressed from being deteriorated and hardened and therefore has excellent durability.

In the embodiment of the present invention, when an unvulcanized polymer sheet composed of the polymer mixture is used for the inner liner, the inclusion of the SIBS ensures air permeability resistance. This eliminates use of or reduces a usage amount of a halogenated rubber of high specific gravity, such as a halogenated butyl rubber, which has been conventionally used to provide air permeability resistance. Accordingly, weight reduction of the tire can be achieved, thus providing an effect of improving fuel consumption. Further, the halogenated rubber has such a disadvantage that the halogen in the rubber causes deterioration of adhesion between the ply cord and the rubber in the pneumatic tire. However, in the present invention, the usage amount of the halogenated rubber can be reduced, so that adhesion between the ply cord and the polymer mixture is improved to provide an effect of improving durability of the pneumatic tire.

The polymer sheet preferably has a thickness of 0.05 mm to 0.6 mm. If the thickness of the polymer sheet is less than 0.05 mm, the polymer sheet may be broken due to pressing pressure when vulcanizing the raw tire in which the polymer sheet is applied to the inner liner, with the result that an air leakage phenomenon may take place in the resulting tire. On the other hand, if the thickness of the polymer sheet exceeds 0.6 mm, the weight of the tire is increased to result in decreased performance in fuel efficiency. The polymer sheet more preferably has a thickness of 0.05 mm to 0.4 mm. The polymer sheet can be formed in the form of a film by means of a general method for forming a thermoplastic resin or a thermoplastic elastomer into a film, such as extrusion molding or calender molding of the SIBS.

(Styrene-Isobutylene-Styrene Triblock Copolymer (SIBS))

In the polymer composition of one embodiment of the present invention, the polymer mixture contains the SIBS at a content of 99.5 mass % to 60 mass %. With the content of the SIBS being 60 mass % or more, there can be obtained an inner liner excellent in air permeability resistance and durability. With the content of the SIBS being 99.5 mass % or less, there can be obtained an inner liner excellent in adhesion with an adjacent rubber. In order to obtain more excellent air permeability resistance and durability, the content thereof is preferably 98 mass % to 70 mass %.

The SIBS generally contains 10 mass % to 40 mass % of styrene. In order to obtain more excellent air permeability resistance and durability, the content of styrene in the SIBS is preferably 10 mass % to 30 mass %.

The SIBS preferably contains isobutylene and styrene at a molar ratio (isobutylene/styrene) of 40/60 to 95/5 in view of rubber elasticity of the copolymer. In the SIBS, the isobutylene block preferably has a degree of polymerization in a range of approximately 10,000 to 150,000, and the styrene block preferably has a degree of polymerization in a range of approximately 10,000 to 30,000, in view of rubber elasticity and handling (when the degree of polymerization is less than 10,000, each block will be in a liquid form).

The molecular weight of the SIBS is not particularly limited, but the SIBS preferably has a weight average molecular weight of 50,000 to 400,000, which is measured through GPC measurement, in view of flowability, molding step, rubber elasticity, and the like. When the weight average molecular weight thereof is less than 50,000, tensile strength and tensile elongation may be unfavorably decreased. On the other hand, when the weight average molecular weight thereof exceeds 400,000, extrusion workability unfavorably becomes bad. In order to further improve air permeability resistance and durability, the SIBS preferably contains the styrene component at a content of 10 mass % to 30

mass %, preferably, 14 mass % to 23 mass %.

The SIBS can be obtained through a general polymerization method for a vinyl-based compound, such as a living cationic polymerization method. For example, each of Japanese Patent Laying-Open No. 62-48704 and Japanese Patent Laying-Open No. 64-62308 discloses that living cationic polymerization is possible between isobutylene and other vinyl compound and use of isobutylene and other compound for a vinyl compound allows for production of a polyisobutylene-based block copolymer. In addition to these, each of US Patent No. 4,946,899, US Patent No. 5,219,948, Japanese Patent Laying-Open No. 3-174403, and the like describes a production method of a vinyl compound polymer using the living cationic polymerization method, for example.

The SIBS does not have a double bond other than double bond of an aromatic side chain in the molecule. Hence, the SIBS is highly stable to ultraviolet rays as compared with a polymer having a double bond in molecule, such as polybutadiene. Accordingly, the SIBS is excellent in weather resistance.

(Styrene-Maleic Anhydride Copolymer)

In the present specification, the term "styrene-maleic anhydride copolymer" is described to represent a concept including: a styrene-maleic anhydride copolymer base resin (hereinafter, also referred to as "SMA base resin"); an ester resin (hereinafter, also referred to as "SMA ester resin") of a styrene-maleic anhydride copolymer, the ester resin being obtained by esterification of the styrene-maleic anhydride copolymer base resin and having a monoester group and a monocarboxylic acid group; and a styrene-maleic anhydride copolymer ammonium salt aqueous solution (hereinafter, also referred to as "SMA resin ammonium salt aqueous solution") which is a solution containing ammonium salt of the styrene-maleic anhydride copolymer base resin.

The styrene-maleic anhydride copolymer has been used as a polymer surfactant or a high-functionality cross linking agent in dispersion or emulsification, and is very excellent in vulcanization adhesion with a rubber. Further, the styrene-maleic anhydride copolymer provides the rubber with wettability, and is therefore excellent in tackiness effect.

In the polymer composition for the inner liner in the present invention, the SIBS is blended with the SMA, thereby achieving improved vulcanization adhesion with a rubber while maintaining air permeability resistance.

In the polymer component of the polymer composition for the inner liner, the content of the SMA is 0.5 mass % to 40 mass %. With the content of the SMA being 0.5 mass % or more, there can be obtained an inner liner excellent in adhesion with an adjacent rubber. With the content of the SMA being 40 mass % or less, there can be obtained an inner liner excellent in air permeability resistance and durability. The content of the SMA in the polymer component is more preferably 2 mass % to 30 mass %.

(Styrene-Maleic Anhydride Copolymer Base Resin)

In one embodiment of the present invention, the SMA preferably contains the SMA base resin in view of unvulcanization tackiness and post-vulcanization adhesion.

The SMA base resin preferably contains the styrene component and the maleic anhydride component at a molar ratio of 50/50 to 90/10, in order to attain a high softening point and high thermal stability.

The SMA base resin preferably has a weight average molecular weight of 4,000 to 20,000 in view of post-vulcanization adhesion and flowability. Moreover, the weight average molecular weight is more preferably 5,000 to 15,000.

In the SMA base resin, the acid value of the maleic anhydride component in the styrene-maleic anhydride copolymer is preferably 50 to 600 in view of unvulcanization tackiness. Moreover, the acid value of the maleic anhydride component is more preferably 95 to 500.

(Ester Resin of Styrene-Maleic Anhydride Copolymer)

In one embodiment of the present invention, the styrene-maleic anhydride copolymer preferably contains the ester resin (hereinafter, also referred to as "SMA ester resin") of the styrene-maleic anhydride copolymer, the ester resin being obtained by esterification of the styrene-maleic anhydride copolymer base resin and having a monoester group and a monocarboxylic acid group.

The SMA ester resin has such a property that vulcanization adhesion is excellent. Hence, by blending the SIBS with the SMA ester resin, the polymer composition for the inner liner can be provided with excellent vulcanization adhesion with a rubber layer. The SMA ester resin preferably contains the styrene component and the maleic anhydride component at a molar ratio of 50/50 to 90/10 in view of vulcanization adhesion.

The SMA ester resin preferably has a weight average molecular weight of 5,000 to 12,000 in view of post-vulcanization adhesion and flowability. Moreover, the weight average molecular weight is more preferably 6,000 to 11,000. In the SMA ester resin, the acid value of the maleic anhydride component is preferably 50 to 400 in view of tackiness to an unvulcanized rubber. Moreover, the acid value of the maleic anhydride component is more preferably

95 to 290. The SMA ester resin can be produced by, for example, introducing a base resin and an alcohol into a reaction container and heating and stirring them under an inert gas atmosphere.

(Styrene-Maleic Anhydride Copolymer Ammonium Salt Aqueous Solution)

In the present invention, the styrene-maleic anhydride copolymer preferably contains the styrene-maleic anhydride copolymer ammonium salt aqueous solution (hereinafter, also referred to as "SMA resin ammonium salt aqueous solution") in which is a solution containing ammonium salt of the SMA base resin.

The SMA ammonium salt aqueous solution has such a property that wettability is excellent. Hence, by blending the SIBS with the SMA ammonium salt aqueous solution, the polymer composition for the inner liner can be provided with excellent tackiness. The SMA ammonium salt aqueous solution preferably has a solid concentration of 10.0% to 45.0%, in view of tackiness to an unvulcanized rubber as well as molding workability. The SMA ammonium salt aqueous solution preferably has a pH of 8.0 to 9.5, in view of tackiness.

The SMA ammonium salt aqueous solution can be produced in the following manner, for example. Water is introduced into a reaction container and a base resin is added under vigorous stirring. Then, ammonium hydroxide is gradually added to cause exothermic reaction. Thereafter, heating is performed to a predetermined temperature, and stirring is continued until completion of dissolution.

(Additive for Polymer Composition)

The polymer composition in one embodiment of the present invention can be blended with various types of compounding agents and additives, which are blended in a polymer composition for tires or a general polymer composition, such as other reinforcers, vulcanizing agents, vulcanization accelerators, various types of oils, antioxidants, softeners, plasticizers, and coupling agents. Examples of the additives include stearic acid, zinc oxide, antioxidant, vulcanization accelerator, and the like.

(Method for Producing Pneumatic Tire)

The polymer composition used for the inner liner in the present invention can be produced using a conventionally known method. An exemplary method is such that the above-described materials are measured to attain a predetermined blending ratio, and thereafter they are kneaded at 100°C to 250°C for 5 minutes to 60 minutes using a rubber kneading device such as an open roll or a Banbury mixer.

Specifically, the SIBS, the SMA, the SMA base resin, the SMA ester resin, and the SMA ammonium salt aqueous solution, as well as various types of additives as required are introduced into a biaxial extruder and are kneaded at approximately 100°C to approximately 250°C and 50 rpm to 300 rpm, thereby obtaining a pellet of the polymer composition.

It should be noted that in order to adjust the thickness of the inner liner for bead region Rb and buttress region Rs, a profile is provided at an extrusion opening for the polymer sheet, whereby a sheet in which thickness Gs of the buttress region is thinned is obtained in one piece. The sheet thus obtained is disposed on the tire inner surface as the inner liner, for example. The blending of the rubber layer of the carcass ply used in the pneumatic tire of the present invention can be such that a generally used rubber component, such as a natural rubber, polyisoprene, a styrene butadiene rubber, or a polybutadiene rubber, is blended with a filler such as carbon black or silica.

Next, a raw tire is attached to a mold, and is heated using a bladder at 150°C to 180°C for 3 minutes to 50 minutes under pressure, thereby obtaining a vulcanized tire. Next, the obtained vulcanized tire is preferably cooled at 50°C to 120°C for 10 seconds to 300 seconds.

The pneumatic tire is fabricated by using the polymer film according to the present invention for the inner liner. The SIBS, the SMA, and the like of the polymer film are thermoplastic elastomers. Hence, they are brought into a softened state in the mold when being heated at, for example, 150°C to 180°C in the step of obtaining the vulcanized tire. The term "softened state" herein refers to an intermediate state between solid and liquid with increased molecular mobility. A thermoplastic elastomer in such a softened state is more reactive than that in the solid state, and is therefore fused with an adjacent member.

In other words, the inner liner, which makes contact with the outer surface of the expanded bladder, is softened by the heating and is fused with the bladder. When taking out the vulcanized tire from the mold with the inner liner and the outer surface of the bladder being fused with each other, the inner liner is detached from an adjacent insulation or the carcass to result in occurrence of air-in phenomenon. In addition, the shape of the tire itself may be deformed.

To address this, the obtained vulcanized tire is immediately quenched at 120°C or less for 10 seconds or more, thereby solidifying the thermoplastic elastomer used in the inner liner. The solidification of the thermoplastic elastomer eliminates the fusion between the inner liner and the bladder, thereby improving releasability in taking out the vulcanized

tire from the mold.

The cooling temperature is preferably 50°C to 120°C. If the cooling temperature is less than 50°C, a special coolant needs to be prepared, which possibly results in decreased productivity. If the cooling temperature is more than 120°C, the thermoplastic elastomer is not sufficiently cooled, with the result that the inner liner remains fused with the bladder when opening the mold. Accordingly, the air-in phenomenon possibly takes place. The cooling temperature is more preferably 70°C to 100°C.

The cooling time is preferably 10 seconds to 300 seconds. When the cooling time is less than 10 seconds, the thermoplastic elastomer is not sufficiently cooled, with the result that the inner liner remains fused with the bladder when opening the mold. Accordingly, the air-in phenomenon possibly takes place. When the cooling time is more than 300 seconds, productivity becomes bad. The cooling time is more preferably 30 seconds to 180 seconds.

The step of cooling the vulcanized tire is performed by cooling the inside of the bladder. The inside of the bladder is empty. Hence, a coolant adjusted to the cooling temperature can be introduced into the bladder after the end of the vulcanization step. It should be noted that the step of cooling the vulcanized tire can be performed by not only cooling the inside of the bladder but also disposing a cooling structure on the mold. For the coolant, one or more selected from a group consisting of air, water vapor, water, and oil are preferably employed. Among them, it is preferable to employ water, which is excellent in cooling efficiency.

<Embodiment B>

The present invention provides a pneumatic tire including an inner liner provided therein, wherein the inner liner is formed of a polymer sheet composed of a thermoplastic elastomer composition that contains 0.1 parts by mass to 100 parts by mass of a tackifier relative to 100 parts by mass of a styrene-isobutylene-styrene triblock copolymer.

(Polymer Composition for Inner Liner)

The polymer composition for the inner liner in the present invention is formed of an elastomer composition composed of a mixture of at least 80 mass % of a styrene-isobutylene-styrene triblock copolymer (SIBS) and at most 20 mass % of a rubber component or a thermoplastic elastomer.

As the thermoplastic elastomer mixed in the SIBS, a styrene-based thermoplastic elastomer is preferable, for example. The term "styrene-based thermoplastic elastomer" refers to a copolymer including a styrene block as a hard segment. Examples thereof include: a styrene-isoprene-styrene block copolymer ("SIS"); a styrene-isobutylene block copolymer ("SIB"); a styrene-butadiene-styrene block copolymer ("SBS"); a styrene-isobutylene-styrene block copolymer ("SIBS"); a styrene-ethylene butene-styrene block copolymer ("SEBS"); a styrene-ethylene propylene-styrene block copolymer ("SEPS"); a styrene-ethylene ethylene propylene-styrene block copolymer ("SEEPS"); and a styrene-butadiene butylene-styrene block copolymer ("SBS").

Further, the styrene-based thermoplastic elastomer may have a molecular structure having an epoxy group. A usable example thereof is Epofriend A1020 provided by Daicel Chemical Industries Ltd, i.e., an epoxy modified styrene-butadiene-styrene copolymer (epoxidized SBS) (having a weight average molecular weight of 100,000 and an epoxy equivalent of 500).

Further, the SIBS can be blended with a rubber component such as a natural rubber, IR, BR, or SBR. The rubber component can be used in combination with the thermoplastic elastomer.

(Tackifier)

The tackifier is blended in a range of 0.1 part by mass to 100 parts by mass, preferably, 1 part by mass to 50 parts by mass relative to 100 parts by mass of the elastomer. If the tackifier is blended by less than 0.1 part by mass, strength of vulcanization adhesion with the second layer is insufficient. On the other hand, if the tackifier is blended by more than 100 parts by mass, the tackiness becomes too high, with the result that workability and productivity are decreased and the gas barrier property is also decreased.

Here, the term "tackifier" refers to an additive for increasing tackiness of the thermoplastic elastomer composition. Examples of such a tackifier will be illustrated below. Further, desirably, the tackifier has a weight average molecular weight Mw of $1 \times 10^2$ to $1 \times 10^6$, and has a softening point falling within a range of 50°C to 150°C. If the weight average molecular weight thereof is less than $1 \times 10^2$, a degree of viscosity becomes low, which is not preferable in terms of sheet moldability. On the other hand, if the weight average molecular weight thereof exceeds $1 \times 10^6$, the tackiness of the inner liner becomes insufficient.

The following exemplifies tackifiers used in the present invention.

[C9 Petroleum Resin]

A C9 petroleum resin is an aromatic petroleum resin obtained by polymerizing C5 to C9 fractions (mainly C9 fraction) in a mixed state. The C5 to C9 fractions are remnants when obtaining useful compounds, such as ethylene, propylene, and butadiene, by thermally decomposing naphtha. Examples thereof include products such as: ARKON P70, P90, P100, P125, P140, M90, M100, M115, and M135 (each provided by Arakawa Chemical Industries, Ltd, and having a softening point of 70°C to 145°C); I-MARV S 100, S110, P100, P125, and P 140 (aromatic copolymer-based hydrogenated petroleum resins each provided by Idemitsu Petrochemical Ltd, having a softening point of 100°C to 140°C, having a weight average molecular weight of 700 to 900, and having a bromine number of 2.0g/100g to 6.0g/100g); and Petcoal XL (provided by TOSOH Corporation).

[C5 Petroleum Resin]

A C5 petroleum resin is an aliphatic petroleum resin obtained by polymerizing C4 to C5 fractions (mainly C5 fraction) in a mixed state. The C4 to C5 fractions are remnants when obtaining useful compounds, such as ethylene, propylene, and butadiene, by thermally decomposing naphtha. Examples thereof include products such as: Hilets G100 (provided by Mitsui Petrochemicals Industries, Ltd, and having a softening point of 100°C); Marcalets T100AS (provided by Maruzen Petrochemical Co., Ltd, and having a softening point of 100°C); and Escorez 1102 (provided by Tonex Co., Ltd, and having a softening point of 110°C).

[Terpene Resin]

Examples of the terpene resin include products such as: YS resin PX800N, PX1000, PX1150, PX1250, and PXN1150N; and Clearon P85, P105, P115, P125, P135, P150, M105, M115, and K100 (each provided by Yasuhara Chemical Co., Ltd, and having a softening point of 75°C to 160°C).

[Aromatic Modified Terpene Resin]

Examples of the aromatic modified terpene resin include products such as: YS resin TO85, TO105 TO115, and TO125 (each provided by Yasuhara Chemical Co., Ltd, and having a softening point of 75°C to 165°C).

[Terpene Phenol Resin]

Examples of the terpene phenol resin include products such as: Tamanol 803L, and 901 (provided by Arakawa Chemical Industries Co., Ltd, and having a softening point of 120°C to 160°C); and YS Polyster U115, U130, T80, T100, T115, T145, and T160 (each provided by Yasuhara Chemical Co., Ltd, and having a softening point of 75°C to 165°C).

[Cumarone Resin]

Examples of the cumarone resin include a cumarone resin having a softening point of 90°C (provided by Kobe Oil Chemical Industrial Co., Ltd).

[Cumarone Indene Oil]

Examples of the cumarone indene oil include products such as 15E (provided by Kobe Oil Chemical Industrial Co., Ltd, and having a fluidizing point of 15°C).

[Rosin Ester]

Examples of the rosin ester include products such as: ester gum AAL, A, AAV, 105, AT, H, HP, and HD (each provided by Arakawa Chemical Industries Co., Ltd, and having a softening point of 68°C to 110°C); and Hariester TF, S, C, DS70L, DS90, and DS 130 (each provided by Harima Chemicals Inc., and having a softening point of 68°C to 138°C).

[Hydrogenated Rosin Ester]

Examples of the hydrogenated rosin ester include products such as Superester A75, A100, A115, and A125 (each provided by Arakawa Chemical Industries Co., Ltd., and having a softening point of 70°C to 130°C).

[Alkylphenol Resin]

Examples of the alkylphenol resin include products such as Tamanol 510 (provided by Arakawa Chemical Industries Co., Ltd, and having a softening point of 75°C to 95°C).

[DCPD]

Examples of the DCPD include products such as Escorez 5300 (provided by Tonex Co., Ltd, and having a softening point of 105°C).

The inner liner can be produced by a general method for forming a thermoplastic resin or a thermoplastic elastomer into a sheet, such as extrusion molding or calender molding.

(Method for Producing Pneumatic Tire)

The pneumatic tire of the present invention can be produced using a general production method. The pneumatic tire can be produced by disposing the above-described inner liner in contact with the carcass ply inside the raw tire and vulcanizing and molding them together with other members. In the vulcanized pneumatic tire, the inner liner and the rubber layer of the carcass ply are adhered to each other in an excellent manner. Thus, the pneumatic tire has excellent air permeability resistance and durability.

It should be noted that in order to adjust the thickness of the inner liner for bead region Rb and buttress region Rs, a profile is provided at an extrusion opening for the polymer sheet, whereby a sheet in which thickness Gs of the buttress region is thinned is obtained in one piece. The sheet thus obtained is disposed on the tire inner surface as the inner liner, for example.

The blending of the rubber layer of the carcass ply used in the pneumatic tire of the present invention can be such that a generally used rubber component, such as a natural rubber, polyisoprene, a styrene butadiene rubber, or a polybutadiene rubber, is blended with a filler such as carbon black or silica.

<Embodiment C>

(Polymer Layer Stack for Inner Liner)

An inner liner in the present invention is formed of a polymer layer stack including a first layer and a second layer. The first layer is a thermoplastic elastomer composition mainly containing a styrene-isobutylene-styrene triblock copolymer (SIBS), and has a thickness of 0.05 mm to 0.6 mm. The second layer is a thermoplastic elastomer composition mainly containing at least one of a styrene-isoprene-styrene triblock copolymer and a styrene-isobutylene diblock copolymer, and has a thickness of 0.01 mm to 0.3 mm. Here, not more than 40 mass %, in particular, 0.5 mass % to 40 mass % of a C4 polymer, which is a polymer of monomers with carbon number 4, is mixed in each of the thermoplastic elastomer compositions of the first layer and the second layer.

(First Layer)

In the present invention, the first layer includes not only the SIBS but also the C4 polymer obtained by polymerizing the monomer units of carbon number 4. The C4 polymer has a low molecular weight component, which can improve unvulcanization tackiness strength and vulcanization adhesion strength between the first layer of the SIBS and another polymer sheet or rubber layer without deteriorating air permeability resistance intrinsic to the SIBS. Thus, when the SIBS layer containing the C4 polymer is used for the inner liner portion of the tire, strength of adhesion with the adjacent rubber layer that forms the carcass, the insulation, or the like is improved, thereby preventing air-in phenomenon between the inner liner and the carcass or between the inner liner and the insulation. A number average molecular weight of the C4 polymer in the GPC method is preferably 300 to 3,000, more preferably, 500 to 2,500. A weight average molecular weight of the polymer in the GPC method is preferably 700 to 100,000, more preferably, 1,000 to 80,000. A viscosity average molecular weight of the polymer in an FCC method is preferably 20,000 to 70,000, more preferably, 30,000 to 60,000.

Examples of the C4 polymer include polybutene, polyisobutylene, and the like. The polybutene is a copolymer that mainly contains isobutene as a monomer unit and that has a molecular structure of long-chain hydrocarbon obtained by reaction of the isobutene with a normal butene. An exemplary, usable polybutene is a hydrogenated polybutene. The polyisobutylene is a copolymer that contains isobutene as a monomer unit and that has a molecular structure of long-chain hydrocarbon obtained by polymerization thereof.

Examples of the polybutene includes Nisseki Polybutene provided by Nippon Oil Corporation (grade LV7, LV50,

LV100, HV15, HV35, HV50, HV100, HV300, and HV1900). Each of them has a number average molecular weight of 300 to 3000 in the GPC method. Alternative examples thereof include Glissopal 550, 1000, 1300, and 2300 provided by BASF. Each of them has a number average molecular weight of 550 to 2300 and has a weight average molecular weight of 700 to 4,5000 in the GPC method. Alternative examples thereof include Idemitsu Polybutene OH, 5H, and 2000H (hydrogenated grade), as well as 15R, 35R, 100R, 300R (non-hydrogenated grade), all of which are provided by Idemitsu Petrochemical Ltd. Each of them has a number average molecular weight of 350 to 3000 with ASTM D2503-92.

Examples of the polyisobutylene includes TETRAX 3T, 4T, 5T, and 6T provided by Nippon Oil Corporation. Each of them has a weight average molecular weight of 30,000 to 100,000 in an NPCCC method (GPC method), and has a viscosity average molecular weight falling within a range of 20,000 to 70,000 in the FCC.

In the present invention, the first layer contains less than 40 mass %, in particular, not less than 0.5 mass % and not more than 40 mass % of the C4 polymer obtained by polymerizing the monomer units of carbon number 4. When the content of the C4 polymer is less than 0.5 mass %, vulcanization adhesion strength with the carcass or the insulation may be decreased. When the content thereof is more than 40 mass %, air permeability resistance may be decreased and viscosity may be decreased to result in bad extrusion workability. The content of the C4 polymer is preferably not less than 5 mass % and not more than 20 mass %. On the other hand, the content of the SIBS in the first layer is preferably not less than 60 mass % and not more than 99.5 mass %. If the content of the SIBS is less than 60 mass %, air permeability resistance may be unfavorably decreased. If the content thereof is more than 99.5 mass %, strength of vulcanization adhesion with the carcass or the insulation may be unfavorably decreased. The content of the SIBS is more preferably not less than 80 mass % and not more than 95 mass %.

The first layer has a thickness of not less than 0.05 mm and not more than 0.6 mm. If the thickness of the first layer is less than 0.05 mm, the first layer may be broken due to pressing pressure when vulcanizing the raw tire in which the polymer sheet is applied to the inner liner, with the result that an air leakage phenomenon may take place in the resulting tire. On the other hand, if the thickness of the first layer exceeds 0.6 mm, the weight of the tire is increased to result in decreased performance in fuel efficiency. Further, the first layer preferably has a thickness of not less than 0.05 mm and not more than 0.4 mm.

(Second Layer)

In the present invention, the second layer is an elastomer composition composed of a mixture of not more than 40 mass % of the above-described C4 polymer and not less than 60 mass % of at least one of a styrene-isoprene-styrene triblock copolymer (hereinafter, also referred to as "SIS") and a styrene-isobutylene diblock copolymer (hereinafter, also referred to as " SIB"), and has a thickness of 0.01 mm to 0.3 mm.

(SIS)

The isoprene block of the styrene-isoprene-styrene triblock copolymer (SIS) is a soft segment. Hence, a polymer film made of the SIS is likely to adhere to a rubber component through vulcanization. Therefore, when a polymer film made of the SIS is used for the inner liner, a pneumatic tire excellent in durability can be obtained because the inner liner is excellent in adhesion with the rubber layer of the carcass ply, for example.

The molecular weight of the SIS is not particularly limited, but the SIS preferably has a weight average molecular weight of 100,000 to 290,000, which is measured through GPC measurement, in view of rubber elasticity and moldability. If the weight average molecular weight thereof is less than 100,000, tensile strength may be unfavorably decreased. On the other hand, if the weight average molecular weight thereof exceeds 290,000, extrusion workability unfavorably becomes bad.

The SIS preferably contains the styrene component at a content of 10 mass % to 30 mass %, in view of tackiness, adhesion, and rubber elasticity. It is preferable that in the SIS, the isoprene block has a degree of polymerization in a range of approximately 500 to 5,000 and the styrene block has a degree of polymerization in a range of approximately 50 to 1,500 in view of rubber elasticity and handling.

In the present invention, it is preferable that in the SIS, the isoprene block has a degree of polymerization in a range of approximately 500 to 5,000 and the styrene block has a degree of polymerization in a range of approximately 50 to 1,500 in order to maintain rubber elasticity and workability.

The SIS can be obtained through a general polymerization method for a vinyl-based compound, such as the living cationic polymerization method. The SIS layer can be obtained by forming the SIS into the form of a film by means of a general method for forming thermoplastic resin or thermoplastic elastomer into a film, such as extrusion molding or calender molding.

(SIB)

The isobutylene block of the styrene-isobutylene diblock copolymer (SIB) is a soft segment. Hence, a polymer film made of the SIB is likely to adhere to a rubber component through vulcanization. Therefore, when a polymer film made of the SIB is used for the inner liner, a pneumatic tire excellent in durability can be obtained because the inner liner is excellent in adhesion with an adjacent rubber that forms the carcass or the insulation, for example.

For the SIB, an SIB of linear molecular chain is preferably used in order to increase rubber elasticity and adhesion. The molecular weight of the SIB is not particularly limited, but the SIS preferably has a weight average molecular weight of 40,000 to 120,000, which is measured through GPC measurement, in order to maintain rubber elasticity and workability. If the weight average molecular weight thereof is less than 40,000, tensile strength may be unfavorably decreased. On the other hand, if the weight average molecular weight thereof exceeds 120,000, extrusion workability unfavorably becomes bad. The SIB preferably contains the styrene component at a content of 10 mass % to 35 mass %, in view of tackiness, adhesion, and rubber elasticity.

In the present invention, it is preferable that in the SIB, the isobutylene block has a degree of polymerization in a range of approximately 300 to 3,000 and the styrene block has a degree of polymerization in a range of approximately 100 to 1,500 in view of rubber elasticity and handling.

The SIB can be obtained through a general polymerization method for a vinyl-based compound, such as the living cationic polymerization method. For example, WO 2005/033035 describes a production method in which the SIB can be obtained by adding methylcyclohexane, n-butyl chloride, and cumyl chloride into an agitator, cooling them to -70°C, reacting them for 2 hours, then adding a large amount of methanol to stop the reaction, and performing vacuum-drying at 60°C.

In the present invention, the second layer is composed of the thermoplastic elastomer composition in which the C4 polymer is mixed in the SIS or the SIB, but is also referred to as "SIS layer" or "SIB layer". Not more than 40 mass %, in particular, 0.5 mass % to 40 mass % of the C4 polymer is mixed relative to the thermoplastic elastomer. If the content of the above-described C4 polymer is less than 0.5 mass %, strength of vulcanization adhesion with the carcass or the insulation may be decreased. If the content thereof is more than 40 mass %, the air permeability resistance may be decreased and the viscosity may be decreased to unfavorably result in bad extrusion workability. The content of the C4 polymer is more preferably not less than 5 mass % and not more than 20 mass %. The content of the SIS or the SIB of the thermoplastic elastomer composition of the second layer is preferably not less than 60 mass % and not more than 99.5 mass %. If the content of the SIS or SIB is less than 60 mass %, the viscosity may be decreased to unfavorably result in bad extrusion workability. If the content thereof is more than 99.5 mass %, strength of vulcanization adhesion with the carcass or the insulation may be unfavorably decreased. The content of the SIS or the SIB is more preferably not less than 80 mass % and not more than 95 mass %.

The second layer has a thickness of not less than 0.01 mm and not more than 0.3 mm. If the thickness of the second layer is less than 0.01 mm, the second layer may be broken due to pressing pressure when vulcanizing the raw tire in which the polymer layer stack is applied to the inner liner, with the result that vulcanization adhesion strength may be decreased. On the other hand, if the thickness of the second layer exceeds 0.3 mm, the weight of the tire is increased to result in decreased performance in fuel efficiency. Further, the second layer preferably has a thickness of not less than 0.01 mm and not more than 0.2 mm.

(Method for Producing Pneumatic Tire)

The pneumatic tire of the present invention can be produced using a general production method. Pneumatic tire 1 can be produced by applying polymer layer stack 10 to the inner liner of the raw tire of pneumatic tire 1 and vulcanizing and molding them together with other members.

Referring to Fig. 2, when applying the polymer layer stack to the inner liner of the pneumatic tire, the surface of the first layer is disposed most inwardly in the tire radial direction and the surface of the second layer is disposed outwardly in the tire radial direction so as to be in contact with carcass 6, whereby vulcanization adhesion between the second layer and carcass 6 can be attained in the step of vulcanizing the tire. In such a pneumatic tire, the inner liner and the rubber layer of the carcass are adhered to each other in an excellent manner, thereby preventing the air-in. Thus, the pneumatic tire can have more excellent air permeability resistance and durability.

It should be noted that in order to adjust the thickness of the inner liner for bead region Rb and buttress region Rs, a profile is provided at an extrusion opening for the polymer sheet, whereby a sheet in which thickness Gs of the buttress region is thinned is obtained in one piece. The sheet thus obtained is disposed on the tire inner surface as the inner liner, for example.

The blending of the rubber layer of the carcass ply used in the pneumatic tire of the present invention can be such that a generally used rubber component, such as a natural rubber, polyisoprene, a styrene-butadiene rubber, or a polybutadiene rubber, is blended with a filler such as carbon black or silica.

<Embodiment D>

The present invention provides a pneumatic tire including an inner liner provided therein, wherein the inner liner is formed of a polymer layer stack of at least two layers. The first layer is composed of a styrene-isobutylene-styrene triblock copolymer (SIBS), and has a thickness falling within a range of 0.05 mm to 0.6 mm. The second layer contains an epoxidized styrene-butadiene-styrene triblock copolymer, and has a thickness of 0.01 mm to 0.3 mm. The second layer is disposed in contact with the rubber layer of the carcass ply.

(Polymer Layer Stack)

In the present invention, the polymer layer stack is formed of the first layer and the second layer, the first layer being composed of the styrene-isobutylene-styrene triblock copolymer (SIBS) and having a thickness of 0.05 mm to 0.6 mm, the second layer containing the epoxidized styrene-butadiene-styrene triblock copolymer and having a thickness of 0.01 mm to 0.3 mm.

(First Layer)

In the present invention, the first layer is composed of the thermoplastic elastomer composition containing the styrene-isobutylene-styrene triblock copolymer (SIBS).

(Second Layer)

In the present invention, the second layer includes an epoxidized SBS layer composed of the epoxidized styrene-butadiene-styrene triblock copolymer (hereinafter, also referred to as "epoxidized SBS").

In the epoxidized styrene-butadiene-styrene triblock copolymer (epoxidized SBS), the hard segment is a styrene block and the soft segment is a butadiene block. The epoxidized SBS is a thermoplastic elastomer obtained by epoxidizing an unsaturated double bond portion included in the butadiene block.

The epoxidized SBS has the styrene block, and therefore provides excellent melt adhesion with the SIBS, which also has a styrene block. Hence, when the SIBS layer and the epoxidized SBS layer are disposed adjacent to each other and are vulcanized, there can be obtained a polymer layer stack in which the SIBS layer and the epoxidized SBS layer are adhered to each other in an excellent manner.

The epoxidized SBS has a soft segment formed of the butadiene block, and is therefore likely to be adhered to the rubber component through vulcanization. Therefore, in the case where the polymer layer stack including the epoxidized SBS layer is employed for the inner liner when the SBS layer is disposed adjacent to, for example, the rubber layer forming the carcass or the insulation and is vulcanized, adhesion between the polymer layer stack and the adjacent rubber layer can be improved.

The molecular weight of the epoxidized SBS is not particularly limited, but the SIS preferably has a weight average molecular weight of 10,000 to 400,000, which is measured through GPC measurement, in view of rubber elasticity and moldability. If the weight average molecular weight thereof is less than 10,000, tensile strength may be unfavorably decreased to result in unstable size. On the other hand, if the weight average molecular weight thereof exceeds 400,000, extrusion workability unfavorably becomes bad. The epoxidized SBS preferably contains the styrene component at a content of 10 mass % to 30 mass %, in view of tackiness, adhesion, and rubber elasticity.

The epoxidized SBS preferably contains the butadiene unit and the styrene unit at a molar ratio (butadiene unit/styrene unit) of 90/10 to 70/30. In epoxidized SBS, it is preferable that the butadiene block has a degree of polymerization in a range of approximately 500 to 5,000 and the styrene block has a degree of polymerization in a range of approximately 50 to 1,500 in view of rubber elasticity and workability.

The epoxidized SBS preferably has an epoxy equivalent of not less than 50 and not more than 1,000 in order to improve adhesion.

The epoxidized SBS layer can be formed in the form of a film by means of a general method for forming a thermoplastic resin or a thermoplastic elastomer into a film, such as extrusion molding or calender molding of the epoxidized SBS. The second layer including the epoxidized SBS has a thickness of 0.01 mm to 0.3 mm. If the thickness of the second layer is less than 0.01 mm, the second layer may be broken due to pressing pressure when vulcanizing the raw tire in which the polymer layer stack is applied to the inner liner, with the result that vulcanization adhesion strength may be decreased. On the other hand, if the thickness of the second layer exceeds 0.3 mm, the weight of the tire is increased to result in decreased performance in fuel efficiency. Further, the second layer preferably has a thickness of 0.05 mm to 0.2 mm.

It should be noted that in the present invention, less than 50 mass % of another styrene-based thermoplastic elastomer relative to the thermoplastic elastomer component can be mixed in the second layer. Examples of such another

styrene-based thermoplastic elastomer include a styrene-isoprene-styrene block copolymer (SIS), a styrene-isobutylene block copolymer (SIB), and the like.

(Method for Producing Pneumatic Tire)

The pneumatic tire of the present invention can be produced using a general production method. Pneumatic tire 1 can be produced by applying polymer layer stack 10 to the inner liner of the raw tire of pneumatic tire 1 and vulcanizing and molding them together with other members. When disposing polymer layer stack 10 in the raw tire, epoxidized SBS layer 12 serving as the second layer is disposed outwardly in the tire radial direction so as to be in contact with carcass ply 6 as shown in Fig. 2, strength of adhesion between epoxidized SBS layer 12 and carcass 6 can be increased in the step of vulcanizing the tire. In the resulting pneumatic tire, the inner liner and the rubber layer of carcass ply 6 are adhered to each other in an excellent manner. Thus, the pneumatic tire has excellent air permeability resistance and durability.

Polymer layer stack 10 can be obtained by, for example, lamination extrusion of the first layer of the SIBS and the second layer of the epoxidized SBS, such as laminate extrusion or coextrusion.

It should be noted that in order to adjust the thickness of the inner liner for bead region Rb and buttress region Rs, a profile is provided at an extrusion opening for the polymer sheet, whereby a sheet in which thickness Gs of the buttress region is thinned is obtained in one piece. The sheet thus obtained is disposed on the tire inner surface as the inner liner, for example.

The blending of the rubber layer of the carcass ply used in the pneumatic tire of the present invention can be such that a generally used rubber component, such as a natural rubber, polyisoprene, a styrene butadiene rubber, or a polybutadiene rubber, is blended with a filler such as carbon black or silica.

[Examples]

<Performance Test>

Pneumatic tires were produced using inner liners of examples A to D and comparative examples A to D, and were subjected to the following performance test.

(1) Detachment Test

Each inner liner (polymer sheet), a rubber sheet used for a carcass and having a thickness of 2 mm (blending: NR/BR/SBR = 40/30/30), and a reinforcement canvas substrate were provided on one another in this order, and were heated at 170°C for 12 minutes under application of pressure, thereby fabricating detachment test specimen. Using the test specimen thus obtained, in accordance with JIS K 6256 "Rubber, vulcanized or thermoplastic - Determination of adhesion test", a detachment test was performed under a room temperature of 23°C, so as to measure adhesion strength between the polymer sheet for the inner liner and the rubber sheet. Based on an obtained numerical value with the value of comparative example 1 being regarded as a reference (100), a detachment force index was calculated by the following calculation formula. As a numerical value of the detachment force between the inner liner and the carcass is larger, adhesion is more excellent.

$$\text{(Detachment Force Index)} = \text{(Adhesion Strength in Each Blend)}/\text{(Adhesion Strength in Comparative Example 1)} \times 100$$

(2) Flection Fatigue Resistance Test

In accordance with JIS-K6260 "Rubber, vulcanized or thermoplastic - Determination of flex cracking and crack growth (De Mattia type)", a predetermined test specimen having a groove at its center was fabricated. For the inner liner, a sheet having a thickness of 0.3 mm was adhered to a rubber and was vulcanized, thereby fabricating a predetermined test specimen. The test was performed in the following manner. That is, a cut was provided in advance at the center of the groove of the test specimen, flection deformation was repeatedly provided, and crack growth was measured. The flection deformation was repeatedly provided at an atmospheric temperature of 23°C, a strain of 30%, and a cycle of 5Hz and a crack length was measured upon the 700000-th provision of deformation, the 1400000-th provision of deformation, and the 2100000-th provision of deformation. The number of repetitions of flection deformation for 1 mm growth of the crack was calculated. With the value of comparative example 1 being regarded as a reference (100), the flection fatigue resistance of the polymer layer stack of each of the examples and the comparative examples was indicated

by an index. It can be said that as the numerical value is larger, the crack is less likely to be grown, i.e., a larger numerical value is better. For example, the index of example 1 can be determined from the following formula:

$$\text{(Flection Fatigue Resistance Index)} = \text{(Number of Repetitions of Flection Deformation of Example 1)}/\text{(Number of Repetitions of Flection Deformation of Comparative Example 1)} \times 100$$

(3) Static Air Pressure Decreasing Ratio Test: Tire Air Leakage Test

A 195/65R15 steel radial tire was produced using the above-described method and was assembled to a JIS specification rim 15 × 6JJ, and air was introduced thereinto at an initial air pressure of 300 kPa. Then, the tire was left for 90 days at a room temperature. Then, decreasing ratio of the air pressure was calculated. It can be said that as the air pressure is less decreased, the air pressure is less likely to be decreased, i.e., less decrease of the air pressure is better.

(4) Crack Resistance Performance

The 195/65R15 steel radial PC tire was assembled to the JIS specification rim 15 × 6JJ, and air was introduced at a proper air pressure. Then, the maximum load corresponding to the air pressure was applied in accordance with the air pressure-loading capability correspondence table of the JATMA YEAR BOOK, and traveling was performed on a drum at a speed of 80 km/h. Then, the traveling was ended upon occurrence of damage that could be identified by visual observation on the external appearance of the tire. Then, the traveling distance was determined. The traveling distance is indicated by an index with the traveling distance of comparative example 1 being regarded as 100. As the index is larger, the cracking resistance is more excellent.

(5) Measurement of Average Thickness

The 195/65R15 steel radial PC tire was divided into eight in the circumferential direction. In each of the divided portions, eight cut samples were made by cutting it in the tire diameter direction with a width of 20 mm. For each of the eight cut samples, the thickness of the inner liner was measured at five points with an equal interval in buttress region Rs and bead region Rb. Arithmetic mean values of the measured values at the 40 points in total were represented by Gs and Gb, respectively.

<Examples A>

Examples 1A to 18A and Comparative Examples 1A to 16A

(Fabrication of Polymer Sheet)

In accordance with the blending formulation shown in each of Table 1A and Table 2A, each compounding agent was introduced into and pelletized by a biaxial extruder (screw diameter: ϕ50 mm; L/D: 30; cylinder temperature: 220°C). The obtained pellet was fabricated into an inner liner formed of the polymer sheet, using a T-die extruder (screw diameter: ϕ80 mm; L/D: 50; die lip width: 500 mm; cylinder temperature: 220°C; film gauge: 0.3 mm) or an inflation coextruder.

(Fabrication of Pneumatic Tire)

The obtained polymer sheet was applied to the inner liner portion of the tire and a raw tire was prepared. The raw tire was press-molded in a mold at 170°C for 20 minutes, thereby fabricating a vulcanized tire having the size of 195/65R15.

Here, in order to adjust the thickness of the inner liner for bead region Rb and buttress region Rs, a profile was provided at an extrusion opening for the polymer sheet, whereby a sheet in which thickness Gs of the buttress region was thinned was obtained in one piece. The sheet thus obtained was disposed on the tire inner surface as the inner liner.

It should be noted that in each of examples 1A to 6A, the value of Gs/Gb was set at 0.75 and the polymer component contained the SMA ester resin or the SMA ammonium salt aqueous solution. In each of examples 7A to 10A, the SIBS was blended with the SMA base resin to adjust the value of Gs/Gb at 0.75 to 0.33. In each of examples 11A to 14A, the SIBS was blended with the SMA base resin and the SMA ester resin to adjust the value of Gs/Gb at 0.75 to 0.33. In each of examples 15A to 18A, the SIBS was blended with the SMA base resin and the SMA ammonium

salt aqueous solution to adjust the value of Gs/Gb at 0.75 to 0.33.

In comparative example 1A, 80 parts by mass of chlorobutyl (IIR), 20 parts by mass ofNR, and 20 parts by mass of filler were mixed with one another using a Banbury mixer and a polymer film having a thickness of 0.1 mm was obtained using a calender roll. The value of Gs/Gb of this polymer film was regarded as 1.

In each of comparative examples 2A to 16A, the polymer film having the blending shown in Table 2A was used as the inner liner. The value of Gs/Gb of the polymer film is shown in Table 2.

<Result of Performance Evaluation>

Test results are shown in Table 1A and Table 2A.

[Table 1A]

| | | | | Examples | | | | | | | | | | | | | | | | | |
|---|---|---|---|---|---|---|---|---|---|---|---|---|---|---|---|---|---|---|---|---|---|
| | | | | 1A | 2A | 3A | 4A | 5A | 6A | 7A | 8A | 9A | 10A | 11A | 12A | 13A | 14A | 15A | 16A | 17A | 18A |
| Inner Liner | Blend (Parts by Mass) | Polymer Mixture Component (mass %) | SIBS (Note 1) | 99.5 | 60 | 99 | 99 | 98.5 | 60 | 80 | 80 | 80 | 80 | 60 | 60 | 60 | 60 | 60 | 60 | 60 | 60 |
| | | | SMA Base Resin (Note 2) | 0.5 | 40 | 0.5 | 0.5 | 0.5 | 20 | 20 | 20 | 20 | 20 | 20 | 20 | 20 | 20 | 20 | 20 | 20 | 20 |
| | | | SMA Ester Resin (Note 3) | - | - | 0.5 | - | 0.5 | 15 | - | - | - | - | 20 | 20 | 20 | 20 | - | - | - | - |
| | | | SMA Ammonium Salt Aqueous Solution (Note 4) | - | - | - | 0.5 | 0.5 | 5 | - | - | - | - | - | - | - | - | 20 | 20 | 20 | 20 |
| | | | Chlorobutyl (Note 5) | - | - | - | - | - | - | - | - | - | - | - | - | - | - | - | - | - | - |
| | | | NR (Note 6) | - | - | - | - | - | - | - | - | - | - | - | - | - | - | - | - | - | - |
| | | Filler (Note 7) | | - | - | - | - | - | - | - | - | - | - | - | - | - | - | - | - | - | - |
| | Layer Thickness (mm) | IIR/NR/Filler Layer | | - | - | - | - | - | - | - | - | - | - | - | - | - | - | - | - | - | - |
| | | SIBS Layer | | - | - | - | - | - | - | - | - | - | - | - | - | - | - | - | - | - | - |
| | | SIBS/SMA Layer | | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | Gs/Gb Ratio | | | 0.75 | 0.75 | 0.75 | 0.75 | 0.75 | 0.75 | 0.75 | 0.58 | 0.5 | 0.33 | 0.75 | 0.58 | 0.5 | 0.33 | 0.75 | 0.58 | 0.5 | 0.33 |
| | Gs (mm) | | | 0.45 | 0.45 | 0.45 | 0.45 | 0.45 | 0.45 | 0.45 | 0.35 | 0.3 | 0.2 | 0.45 | 0.35 | 0.3 | 0.2 | 0.45 | 0.35 | 0.3 | 0.2 |
| Performance Evaluation | Detachment Force (Index) | | | 80 | 98 | 92 | 93 | 95 | 120 | 90 | 90 | 90 | 90 | 100 | 100 | 100 | 100 | 105 | 105 | 105 | 105 |
| | Flection Fatigue Resistance (Index) | | | 180 | 110 | 175 | 173 | 171 | 105 | 160 | 160 | 160 | 160 | 110 | 110 | 110 | 110 | 108 | 108 | 108 | 108 |
| | Static Air Pressure Decreasing Ratio (%/Month) | | | 2.5 | 2.8 | 2.5 | 2.5 | 2.5 | 2.9 | 2.7 | 2.7 | 2.7 | 2.7 | 2.8 | 2.8 | 2.8 | 2.8 | 2.8 | 2.8 | 2.8 | 2.8 |
| | Cracking Resistance (Index) | | | 112 | 109 | 110 | 110 | 110 | 108 | 110 | 110 | 109 | 108 | 110 | 111 | 110 | 108 | 109 | 110 | 110 | 107 |

[Table 2A]

| | | | | Comparative Examples | | | | | | | | | | | | | | | |
|---|---|---|---|---|---|---|---|---|---|---|---|---|---|---|---|---|---|---|---|
| | | | | 1A | 2A | 3A | 4A | 5A | 6A | 7A | 8A | 9A | 10A | 11A | 12A | 13A | 14A | 15A | 16A |
| Inner Liner | Blend (Parts by Mass) | Polymer Mixture Component (mass %) | SIBS (Note 1) | - | 100 | 50 | 50 | 99.5 | 80 | 60 | 99 | 99 | 98.5 | 60 | 60 | 60 | 80 | 60 | 60 |
| | | | SMA Base Resin (Note 2) | - | - | 50 | 20 | 0.5 | 20 | 40 | 0.5 | 0.5 | 0.5 | 20 | 20 | 20 | 20 | 20 | 20 |
| | | | SMA Ester Resin (Note 3) | - | - | - | 20 | - | - | - | 0.5 | - | 0.5 | 20 | - | 15 | - | 20 | - |
| | | | SMA Ammonium Salt Aqueous Solution (Note 4) | - | - | - | 10 | - | - | - | - | 0.5 | 0.5 | - | 20 | 5 | - | - | 20 |
| | | | Chlorobutyl (Note 5) | 80 | - | - | - | - | - | - | - | - | - | - | - | - | - | - | - |
| | | | NR (Note 6) | 20 | - | - | - | - | - | - | - | - | - | - | - | - | - | - | - |
| | | Filler (Note 7) | | 60 | - | - | - | - | - | - | - | - | - | - | - | - | - | - | - |
| | Layer Thickness (mm) | IIR/NR/Filler Layer | | 1.0 | - | - | - | - | - | - | - | - | - | - | - | - | - | - | - |
| | | SIBS Layer | | - | 0.6 | - | - | - | - | - | - | - | - | - | - | - | - | - | - |
| | | SIBS/SMA Layer | | - | - | 0.6 | 0.6 | 0.6 | 0.6 | 0.6 | 0.6 | 0.6 | 0.6 | 0.6 | 0.6 | 0.6 | 0.6 | 0.6 | 0.6 |
| | Gs/Gb Ratio | | | 1.0 | 1.0 | 1.0 | 1.0 | 1.0 | 1.0 | 1.0 | 1.0 | 1.0 | 1.0 | 1.0 | 1.0 | 1.0 | 0.25 | 0.25 | 0.25 |
| | Gs (mm) | | | 1.0 | 0.6 | 0.6 | 0.6 | 0.6 | 0.6 | 0.6 | 0.6 | 0.6 | 0.6 | 0.6 | 0.6 | 0.6 | 0.15 | 0.15 | 0.15 |
| Performance Evaluation | Detachment Force (Index) | | | 100 | 60 | 100 | 120 | 80 | 90 | 98 | 92 | 93 | 95 | 100 | 105 | 120 | 90 | 100 | 105 |
| | Flection Fatigue Resistance (Index) | | | 100 | 105 | 95 | 95 | 180 | 160 | 110 | 175 | 173 | 171 | 110 | 108 | 105 | 160 | 110 | 108 |
| | Static Air Pressure Decreasing Ratio (%/Month) | | | 3.2 | 2.5 | 3.2 | 3.2 | 2.5 | 2.7 | 2.8 | 2.5 | 2.5 | 2.5 | 2.8 | 2.8 | 2.9 | 2.7 | 2.8 | 2.8 |
| | Cracking Resistance (Index) | | | 100 | 100 | 100 | 100 | 101 | 101 | 100 | 101 | 100 | 101 | 103 | 100 | 100 | 100 | 99 | 99 |

(Note 1) SIBS: "SIBSTAR 102T" (Shore A hardness: 25; the content of the styrene: 15 mass %) provided by Kaneka Corporation.

(Note 2) SMA base resin: "SMA1000" (styrene component/maleic anhydride component: 50/50; weight average molecular weight: 5,500; acid value of maleic anhydride: 490) provided by Sartomer.

(Note 3) SMA ester resin: "SMA1440" (styrene component/maleic anhydride component: 80/20; weight average molecular weight: 7,000; acid value of maleic anhydride: 200) provided by Sartomer.

(Note 4) SMA ammonium salt aqueous solution: "SMA1000H" (pH 9.0) provided by Sartomer.

(Note 5) Chlorobutyl: "Exxon chlorobutyl 1068" provided by Exxon Mobil Corporation.

(Note 6) NR (natural rubber): TSR20.

(Note 7) Filler: "SEAST V" (N660, $N_2SA$: $27m^2/g$) provided by Tokai Carbon Co., Ltd.

The layer thickness of the "SIBS/SMA layer" in each of Table 1A and Table 2A indicates the thickness of a region other than Gs. Gb in each example and each comparative example (except comparative example 1) is 0.6 mm in thickness.

(Comparison between Each of Examples 1A to 6A and Each of Comparative Examples 1A to 13A)

In the pneumatic tire of each of examples 1A to 6A, the inner liner was formed of a polymer sheet composed of a polymer mixture containing 99.5 mass % to 60 mass % of the styrene-isobutylene-styrene triblock copolymer and 0.5 mass % to 40 mass % of the styrene-maleic anhydride copolymer, and the ratio (Gs/Gb) between average thickness Gs of buttress region Rs and average thickness Gb of bead region Rb was 0.3 to 0.75. Accordingly, the pneumatic tire of each of examples 1A to 6A included the inner liner that provided improved air permeability resistance, flection fatigue resistance, and cracking resistance.

In contrast, in the pneumatic tire of each of comparative examples 1A, 3A, and 4A, the inner liner contained the SIBS at a content of less than 60 mass %, thus failing to improve air permeability resistance, flection fatigue resistance, and cracking resistance. Further, in the pneumatic tire of comparative example 2A, the inner liner contained the SIBS at a content of more than 99.5 mass %, thus failing to improve air permeability resistance, flection fatigue resistance, and cracking resistance. Further, in the pneumatic tire of each of comparative examples 5A to 13A, the ratio (Gs/Gb) between average thickness Gs of buttress region Rs and average thickness Gb of bead region Rb was more than 0.75 (1.0), thus failing to improve air permeability resistance, flection fatigue resistance, and cracking resistance.

(Comparison between Each of Examples 7A to 10A and Comparative Example 14A)

In the pneumatic tire of each of examples 7A to 10A, the ratio (Gs/Gb) between average thickness Gs of buttress region Rs and average thickness Gb of bead region Rb was 0.3 to 0.75 in the inner liner. In the pneumatic tire of comparative example 14A, the ratio (Gs/Gb) between average thickness Gs of buttress region Rs and average thickness Gb of bead region Rb was less than 0.3 (0.25). Thus, the pneumatic tire of each of examples 7A to 10A was more excellent than that of comparative example 14A, in terms of air permeability resistance, flection fatigue resistance, and cracking resistance.

(Comparison between Each of Examples 11A to 14A and Comparative Example 15A)

In the pneumatic tire of each of examples 11A to 14A, the ratio (Gs/Gb) between average thickness Gs of buttress region Rs and average thickness Gb of bead region Rb was 0.3 to 0.75 in the inner liner. In the pneumatic tire of comparative example 15A, the ratio (Gs/Gb) between average thickness Gs of buttress region Rs and average thickness Gb of bead region Rb was less than 0.3 (0.25). Thus, the pneumatic tire of each of examples 11 A to 14A was more excellent than that of comparative example 15A, in terms of air permeability resistance, flection fatigue resistance, and cracking resistance.

(Comparison between Each of Examples 15A to 18A and Comparative Example 16A)

In the pneumatic tire of each of examples 15A to 18A, the ratio (Gs/Gb) between average thickness Gs of buttress region Rs and average thickness Gb of bead region Rb was 0.3 to 0.75 in the inner liner. In the pneumatic tire of comparative example 16A, the ratio (Gs/Gb) between average thickness Gs of buttress region Rs and average thickness Gb of bead region Rb was less than 0.3 (0.25). Thus, the pneumatic tire of each of examples 15A to 18A was more excellent than that of comparative example 16A, in terms of air permeability resistance, flection fatigue resistance, and cracking resistance.

<Examples B>

In accordance with specifications shown in Table 1B and Table 2B, pneumatic tires of examples and comparative examples were produced and performances thereof were evaluated. Blending components for the inner liner are as follows.

[Table 1B]

| | | | | Comparative Example 1B | Comparative Example 2B | Comparative Example 3B | Comparative Example 4B | Comparative Example 5B | Comparative Example 6B | Comparative Example 7B | Comparative Example 8B | Comparative Example 9B | Comparative Example 10B | Comparative Example 11B |
|---|---|---|---|---|---|---|---|---|---|---|---|---|---|---|
| Inner Liner | Blending Amount (Parts By Mass) | Polymer Mixture Component | SIBS (Note 1) | - | 100 | 100 | 100 | 100 | 100 | 100 | 100 | 100 | 100 | 100 |
| | | | Tackifier A (Note 2) | - | - | 1 | - | - | 100 | - | - | 0.05 | 110 | 1 |
| | | | Tackifier B (Note 3) | - | - | - | 1 | - | - | 100 | - | - | - | - |
| | | | Tackifier C (Note 4) | - | - | - | - | 1 | - | - | 100 | - | - | - |
| | | | Chlorobutyl (Note 5) | 80 | - | - | - | - | - | - | - | - | - | - |
| | | | NR (Note 6) | 20 | - | - | - | - | - | - | - | - | - | - |
| | | Filler (Note 7) | | 60 | - | - | - | - | - | - | - | - | - | - |
| | Liner Thickness Gb (mm) | IIR/NR/Filler Layer | | 1.00 | - | - | - | - | - | - | - | - | - | - |
| | | SIBS Layer | | - | 0.60 | - | - | - | - | - | - | - | - | - |
| | | SIBS + Tackifier Layer | | - | - | 0.60 | 0.60 | 0.60 | 0.60 | 0.60 | 0.60 | 0.60 | 0.60 | 0.60 |
| | Gs/Gb Ratio | | (-) | 1.00 | 1.00 | 1.00 | 1.00 | 1.00 | 1.00 | 1.00 | 1.00 | 0.75 | 0.75 | 0.25 |
| | Gs | | (mm) | 1.00 | 0.60 | 0.60 | 0.60 | 0.60 | 0.60 | 0.60 | 0.60 | 0.45 | 0.45 | 0.15 |
| Performance Evaluation | Detachment Force | | Index | 100 | 60 | 110 | 105 | 102 | 112 | 106 | 103 | 100 | 100 | 110 |
| | Flection Fatigue Resistance | | Index | 100 | 105 | 105 | 105 | 105 | 101 | 101 | 101 | 100 | 101 | 105 |
| | Static Air Decreasing Ratio | | (%/Month) | 3.2 | 2.5 | 2.5 | 2.5 | 2.5 | 2.8 | 2.8 | 2.8 | 2.5 | 3.0 | 2.5 |
| | Cracking Resistance | | Index | 100 | 100 | 100 | 100 | 100 | 100 | 100 | 100 | 100 | 98 | 95 |

[Table 2B]

| | | | | Example 1B | Example 2B | Example 3B | Example 4B | Example 5B | Example 6B | Example 7B | Example 8B | Example 9B |
|---|---|---|---|---|---|---|---|---|---|---|---|---|
| Inner Liner | Blending Amount (parts by mass) | Polymer Mixture Component | SIBS (Note 1) | 100 | 100 | 100 | 100 | 100 | 100 | 100 | 100 | 100 |
| | | | Tackifier A (Note 2) | 1 | - | - | 100 | - | - | 1 | 1 | 1 |
| | | | Tackifier B (Note 3) | - | 1 | - | - | 100 | - | - | - | - |
| | | | Tackifier C (Note 4) | - | - | 1 | - | - | 100 | - | - | - |
| | | | Chlorobutyl (Note 5) | - | - | - | - | - | - | - | - | - |
| | | | NR (Note 6) | - | - | - | - | - | - | - | - | - |
| | | Filler (Note 7) | | - | - | - | - | - | - | - | - | - |
| | Layer Thickness Gb (mm) | IIR/NR/Filler Layer | | - | - | - | - | - | - | - | - | - |
| | | SIBS Layer | | - | - | - | - | - | - | - | - | - |
| | | SIBS + Tackifier Layer | | 0.60 | 0.60 | 0.60 | 0.60 | 0.60 | 0.60 | 0.60 | 0.60 | 0.60 |
| | Gs/Gb Ratio | | (-) | 0.75 | 0.75 | 0.75 | 0.75 | 0.75 | 0.75 | 0.58 | 0.50 | 0.33 |
| | Gs | | (mm) | 0.45 | 0.45 | 0.45 | 0.45 | 0.45 | 0.45 | 0.35 | 0.30 | 0.20 |
| Performance Evaluation | Detachment Force | | Index | 110 | 105 | 102 | 112 | 106 | 103 | 110 | 110 | 110 |
| | Flection Fatigue Resistance | | Index | 105 | 105 | 105 | 101 | 101 | 101 | 105 | 105 | 105 |
| | Static Air Decreasing Ratio | | (%/Month) | 2.5 | 2.5 | 2.5 | 2.8 | 2.8 | 2.8 | 2.5 | 2.5 | 2.5 |
| | Cracking Resistance | | Index | 110 | 110 | 110 | 110 | 109 | 109 | 110 | 109 | 106 |

(Note 1) "SIBSTAR 102 (Shore A hardness: 25; the content of the styrene component: 15 mass %; weight average molecular weight: 100,000)" provided by Kaneka Corporation was used for the SIBS.

(Note 2) A C9 petroleum resin, ARKON P140 (provided by Arakawa Chemical Industries Co., Ltd; softening point: 140°C; weight average molecular weight Mw: 900), was used for Tackifier A.

(Note 3) A terpene resin, YS resin PX1250 (provided by Yasuhara Chemical Co., Ltd; softening point of 125°C; weight average molecular weight Mw: 700), was used for Tackifier B.

(Note 4) A hydrogenated rosin ester, Super ester A125 (provided by Arakawa Chemical Industries Co., Ltd; softening point: 125°C; weight average molecular weight Mw: 700), was used for Tackifier C.

(Production of Inner Liner)

In accordance with the blending formulation shown in each of Table 1B and Table 2B, a thermoplastic elastomer composition was pelletized by a biaxial extruder (screw diameter: ϕ50 mm; L/D: 30; cylinder temperature: 220°C). Thereafter, the inner liner was fabricated using a T-die extruder (screw diameter: ϕ80 mm; L/D: 50; die lip width: 500 mm; cylinder temperature: 220°C).

(Production of Pneumatic Tire)

The pneumatic tire was produced as follows. That is, the inner liner was used to produce a raw tire having the basic structure shown in Fig. 1 with the size of 195/65R15. Then, in the vulcanization step, press molding was performed at 170°C for 20 minutes. The vulcanized tire was cooled at 100°C for 3 minutes, and then was taken out from the mold, thereby producing the pneumatic tire.

Here, in order to adjust the thickness of the inner liner for bead region Rb and buttress region Rs, a profile was provided at an extrusion opening for the polymer sheet, whereby a sheet in which thickness Gs of the buttress region was thinned was obtained in one piece. The sheet thus obtained was disposed on the tire inner surface as the inner liner.

In each of Table 1B and Table 2B, the thickness of the inner liner represents the thickness of the Gb region. Apart from comparative example 1B, Gb was 0.6 mm in each of the examples and the comparative examples.

For the inner liner of comparative example 1B, the following blending components were mixed using a Banbury mixer, and a sheet was formed therefrom using a calendering roll, thereby obtaining a polymer film having a thickness of 1.0 mm. The value of Gs/Gb was 1.

| | |
|---|---|
| IIR (Note 5) | 80 parts by mass |
| Natural rubber (Note 6) | 20 parts by mass |
| Filler (Note 7) | 60 parts by mass |

(Note 5) "Exxon chlorobutyl 1068" provided by Exxon Mobil Corporation was used for IIR.

(Note 6) For the natural rubber, TSR20 was used.

(Note 7) For the filler, "SEAST V (N660; nitrogen adsorption specific surface area: 27 $m^2/g$)" provided by Tokai Carbon Co., Ltd was used.

<Result of Performance Evaluation>

(Comparative Example 1B)

Comparative example 1B represents the specification of a conventional inner liner, and serves as a reference for the performance evaluation.

(Comparative Example 2B)

Comparative example 2B was an example in which the SIBS layer was used as the inner liner. The value of Gs/Gb was 1. Although the detachment force was inferior, the static air decreasing ratio was improved.

(Comparative Examples 3B to 8B)

Comparative examples 3B to 5B represent examples in which 1 part of different types of tackifiers were mixed in the SIBS. Comparative examples 6B to 8B represent examples in which 100 parts of different types of tackifiers were mixed in the SIBS. The value of Gs/Gb was 1 in each of the comparative examples. In each of the comparative examples, the static air decreasing ratio was improved.

(Comparative Examples 9B and 10B)

Comparative example 9B represents an example in which a thermoplastic elastomer composition containing 0.05 parts by mass of a tackifier mixed in the SIBS was used for the inner liner. Comparative example 10B represents an example in which a thermoplastic elastomer composition containing 110 parts by mass of a tackifier mixed in the SIBS was used for the inner liner. The value of Gs/Gb was 0.75 in each of the comparative examples. In comparative example 9B, the static air decreasing ratio was improved. In comparative example 10B, the static air decreasing ratio was improved but the cracking resistance was inferior.

(Comparative Example 11B)

Comparative example 11B represents an example in which a thermoplastic elastomer composition containing 1 part by mass of a tackifier mixed in the SIBS was used for the inner liner. The value of Gs/Gb was 0.25. In comparative example 11B, the static air decreasing ratio was improved but the cracking resistance was inferior.

(Examples 1B to 6B)

Each of examples 1B to 3B represents an example in which a thermoplastic elastomer composition containing 1 part by mass of a tackifier mixed in the SIBS was used for the inner liner. Each of examples 4B to 6B represents an example in which a thermoplastic elastomer composition containing 100 parts by mass of a tackifier mixed in the SIBS was used for the inner liner. The value of Gs/Gb was 0.75 in each of the examples. In each of examples 1B to 6B, the detachment force, the flection fatigue resistance, the static air decreasing ratio, and the cracking resistance were comprehensively improved.

(Examples 7B to 9B)

Each of examples 7B to 9B represents an example in which a thermoplastic elastomer composition containing 1 part by mass of a tackifier mixed in the SIBS was used for the inner liner. The value of Gs/Gb in example 7B was the largest, i.e., 0.58. The value thereof in example 9B was the smallest, i.e., 0.33. In each of examples 7B to 9B, the detachment force, the flection fatigue resistance, the static air decreasing ratio, and the cracking resistance were comprehensively improved.

<Examples C>

In accordance with specifications shown in Table 1C, Table 2C, and Table 3C, pneumatic tires of examples and comparative examples were produced and performances thereof were evaluated. The SIB, the SIBS, and the SIS for the first layer and the second layer were prepared as follows.

(SIB)

Into a 2L reaction container having an agitator, 589 mL of methylcyclohexane (dried with molecular sieves), 613 ml of n-butyl chloride (dried with molecular sieves), and 0.550 g of cumyl chloride were added. The reaction container was cooled to - 70°C, and then 0.35 mL of α-picoline (2-methylpyridine) and 179 mL of isobutylene were added. Further, 9.4 mL of titanium tetrachloride was added to start polymerization. They were reacted with each other for 2.0 hours while stirring the solution at -70°C. Next, 59 mL of styrene was added to the reaction container, and reaction was continued for another 60 minutes. Thereafter, a large amount of methanol was added to stop the reaction. After removing a solvent and the like from the reaction solution, the polymer was dissolved with toluene and rinsed twice. This toluene solution was added to a methanol mixture to precipitate a polymer. The polymer thus obtained was dried at 60°C for 24 hours, thereby obtaining a styrene-isobutylene diblock copolymer.

Content of styrene component: 15 mass %
Weight average molecular weight: 70,000

(SIBS)

"SIBSTAR 102T (Shore A hardness: 25; the content of the styrene component: 15 mass %; weight average molecular weight: 100,000)" provided by Kaneka Corporation was used.

(SIS)

D1161JP (the content of the styrene component: 15 mass %; weight average molecular weight: 150,000) provided by Kraton Polymers was used.

(Polybutene)

"Nisseki Polybutene grade HV300" (number average molecular weight: 300) provided by Nippon Oil Corporation

(Polyisobutylene)

"TETRAX 3T" (viscosity average molecular weight: 30,000; weight average molecular weight: 49,000) provided by Nippon Oil Corporation

(Production of Pneumatic Tire)

The above-described SIBS, SIS, and SIB were pelletized using a biaxial extruder (screw diameter: ϕ50 mm; L/D: 30; cylinder temperature: 220°C). Thereafter, the inner liner was fabricated using a T-die extruder (screw diameter: ϕ80 mm; L/D: 50; die lip width: 500 mm; cylinder temperature: 220°C; film gauge: 0.3 mm) or an inflation coextruder.
The pneumatic tire was produced as follows. That is, the above-described polymer layer stack was used for the inner liner to produce a raw tire having the basic structure shown in Fig. 1 with the size of 195/65R15. Then, in the vulcanization step, press molding was performed at 170°C for 20 minutes.
Here, in order to adjust the thickness of the inner liner for bead region Rb and buttress region Rs, a profile was provided at an extrusion opening for the polymer sheet, whereby a sheet in which thickness Gs of the buttress region was thinned was obtained in one piece. The sheet thus obtained was disposed on the tire inner surface as the inner liner.

[Table 1C]

| | | | | Comparative Example 1C | Comparative Example 2C | Comparative Example 3C | Comparative Example 4C | Comparative Example 5C | Comparative Example 6C | Comparative Example 7C | Comparative Example 8C | Comparative Example 9C | Example 1C | Example 2C | Example 3C | Example 4C | Example 5C | Example 6C |
|---|---|---|---|---|---|---|---|---|---|---|---|---|---|---|---|---|---|---|
| Inner Liner | Blending Amount (parts by mass) | First Layer | SIBS | - | 100 | 95 | 95 | 55 | 95 | 55 | 95 | 100 | 95 | 60 | 95 | 95 | 60 | 95 |
| | | | Polybutene | - | - | 5 | 5 | 45 | 5 | - | - | - | 5 | 40 | 5 | - | - | - |
| | | | Polyisobutylene | - | - | - | - | - | - | 45 | 5 | - | - | - | - | 5 | 40 | 5 |
| | | Second Layer | SIS | - | - | - | 95 | 95 | 55 | 95 | 55 | 100 | 95 | 95 | 60 | 95 | 95 | 60 |
| | | | Polybutene | - | - | - | 5 | 5 | 45 | - | - | - | 5 | 5 | 40 | - | - | - |
| | | | Polyisobutylene | - | - | - | - | - | - | 5 | 45 | - | - | - | - | 5 | 5 | 40 |
| | | | SIB | - | - | - | - | - | - | - | - | - | - | - | - | - | - | - |
| | | | Polybutene | - | - | - | - | - | - | - | - | - | - | - | - | - | - | - |
| | | | Polyisobutylene | - | - | - | - | - | - | - | - | - | - | - | - | - | - | - |
| | | IIR (Chlorobutyl) | | 80 | - | - | - | - | - | - | - | - | - | - | - | - | - | - |
| | | NR (Natural Rubber) | | 20 | - | - | - | - | - | - | - | - | - | - | - | - | - | - |
| | | Filler | | 60 | - | - | - | - | - | - | - | - | - | - | - | - | - | - |
| | Layer Thickness (mm) | IIR/NR/Filler Layer | | 1.00 | - | - | - | - | - | - | - | - | - | - | - | - | - | - |
| | | First layer | (A)SIBS Layer | - | 0.60 | 0.60 | 0.40 | 0.40 | 0.40 | 0.40 | 0.40 | 0.40 | 0.40 | 0.40 | 0.40 | 0.40 | 0.40 | 0.40 |
| | | Second Layer | (B)-1 SIS Layer | - | - | - | 0.20 | 0.20 | 0.20 | 0.20 | 0.20 | 0.20 | 0.20 | 0.20 | 0.20 | 0.20 | 0.20 | 0.20 |
| | | | (B)-2 SIB Layer | - | - | - | - | - | - | - | - | - | - | - | - | - | - | - |
| | Gs/Gb Ratio | | | 1.00 | 1.00 | 1.00 | 1.00 | 0.75 | 0.75 | 0.75 | 0.75 | 0.75 | 0.75 | 0.75 | 0.75 | 0.75 | 0.75 | 0.75 |
| | Gs | | (mm) | 1.00 | 0.60 | 0.60 | 0.60 | 0.45 | 0.45 | 0.45 | 0.45 | 0.45 | 0.45 | 0.45 | 0.45 | 0.45 | 0.45 | 0.45 |
| Performance Evaluation | Detachment Force | | Index | 100 | 60 | 76 | 106 | 110 | 110 | 110 | 110 | 95 | 106 | 108 | 108 | 106 | 108 | 108 |
| | Flection Fatigue Resistance | | Index | 100 | 105 | 105 | 108 | 97 | 101 | 97 | 100 | 103 | 108 | 100 | 108 | 108 | 101 | 107 |
| | Static Air Decreasing Ratio | | (%/Month) | 3.2 | 2.5 | 2.6 | 2.6 | 3.1 | 2.7 | 3.1 | 2.7 | 2.6 | 2.6 | 2.9 | 2.6 | 2.6 | 2.9 | 209 |
| | Cracking Resistance | | Index | 100 | 100 | 97 | 95 | 98 | 99 | 98 | 99 | 101 | 102 | 102 | 102 | 102 | 102 | 102 |

[Table 2C]

| | | | | Example | Example | Example | Example | Comparative Example | Example | Example | Example | Example | Example | Example | Example | Example | Example | Comparative Example |
|---|---|---|---|---|---|---|---|---|---|---|---|---|---|---|---|---|---|---|
| | | | | 7C | 8C | 9C | 10C | 10C | 11C | 12C | 13C | 14C | 15C | 16C | 17C | 18C | 19C | 11C |
| Inner Liner | Blending Amount (parts by mass) | First Layer | SIBS | 95 | 95 | 95 | 95 | 95 | 95 | 60 | 95 | 60 | 95 | 95 | 95 | 95 | 95 | 95 |
| | | | Polybutene | 5 | 5 | 5 | 5 | 5 | 5 | 40 | 5 | - | - | 5 | 5 | 5 | 5 | 5 |
| | | | Polyisobutylene | - | - | - | - | - | - | - | - | 40 | 5 | - | - | - | - | - |
| | | Second Layer | SIS | 95 | 95 | 95 | 95 | - | - | - | - | - | - | - | - | - | - | 95 |
| | | | Polybutene | 5 | 5 | 5 | 5 | - | - | - | - | - | - | - | - | - | - | 5 |
| | | | Polyisobutylene | - | - | - | - | - | - | - | - | - | - | - | - | - | - | - |
| | | | SIB | - | - | - | - | 95 | 95 | 95 | 60 | 95 | 60 | 95 | 95 | 95 | 95 | 95 |
| | | | Polybutene | - | - | - | - | 5 | 5 | 5 | 40 | - | - | 5 | 5 | 5 | 5 | 5 |
| | | | Polyisobutylene | - | - | - | - | - | - | - | - | 5 | 40 | - | - | - | - | - |
| | | IIR (Chlorobutyl) | | - | - | - | - | - | - | - | - | - | - | - | - | - | - | - |
| | | NR (Natural Rubber) | | - | - | - | - | - | - | - | - | - | - | - | - | - | - | - |
| | | Filler | | - | - | - | - | - | - | - | - | - | - | - | - | - | - | - |
| | Layer Thickness (mm) | IIR/NR/Filler Layer | | - | - | - | - | - | - | - | - | - | - | - | - | - | - | - |
| | | First Layer | (A)SIBS Layer | 0.40 | 0.40 | 0.40 | 0.40 | 0.40 | 0.40 | 0.40 | 0.40 | 0.40 | 0.40 | 0.40 | 0.40 | 0.40 | 0.40 | 0.40 |
| | | Second Layer | (B)-1 SIS Layer | 0.20 | 0.20 | 0.20 | 0.20 | - | - | - | - | - | - | - | - | - | - | 0.10 |
| | | | (B)-2 SIB Layer | - | - | - | - | 0.20 | 0.20 | 0.20 | 0.20 | 0.20 | 0.20 | 0.20 | 0.20 | 0.20 | 0.20 | 0.10 |
| | Gs/Gb Ratio | | | 0.58 | 0.50 | 0.33 | 0.25 | 1.00 | 0.75 | 0.75 | 0.75 | 0.75 | 0.75 | 0.58 | 0.50 | 0.33 | 0.25 | 1.00 |
| | Gs | | (mm) | 0.35 | 0.30 | 0.20 | 0.15 | 0.60 | 0.45 | 0.45 | 0.45 | 0.45 | 0.45 | 0.35 | 0.30 | 0.20 | 0.15 | 0.60 |
| Performance Evaluation | Detachment Force | | Index | 106 | 106 | 106 | 106 | 106 | 106 | 108 | 108 | 108 | 108 | 106 | 106 | 106 | 106 | 106 |
| | Flection Fatigue Resistance | | Index | 108 | 108 | 108 | 108 | 108 | 108 | 101 | 107 | 100 | 108 | 108 | 108 | 108 | 108 | 108 |
| | Static Air Decreasing Ratio | | (%/Month) | 2.6 | 2.6 | 2.6 | 2.6 | 2.6 | 2.6 | 2.9 | 2.6 | 2.9 | 2.6 | 2.6 | 2.6 | 2.6 | 2.6 | 2.6 |
| | Cracking Resistance | | Index | 103 | 105 | 102 | 98 | 96 | 102 | 102 | 103 | 102 | 102 | 103 | 104 | 102 | 98 | 95 |

[Table 3C]

| | | | | Example 20C | Example 21C | Example 22C | Example 23C | Example 24C | Example 25C | Example 26C | Example 27C | Example 28C |
|---|---|---|---|---|---|---|---|---|---|---|---|---|
| Inner Liner | Blending Amount (parts by mass) | First Layer | SIBS | 95 | 60 | 95 | 60 | 95 | 95 | 95 | 95 | 95 |
| | | | Polybutene | 5 | 40 | 5 | - | - | 5 | 5 | 5 | 5 |
| | | | Polyisobutylene | - | - | - | 40 | 5 | - | - | - | - |
| | | Second Layer | SIS | 95 | 95 | 60 | 95 | 60 | 95 | 95 | 95 | 95 |
| | | | Polybutene | 5 | 5 | 40 | - | - | 5 | 5 | 5 | 5 |
| | | | Polyisobutylene | - | - | - | 5 | 40 | - | - | - | - |
| | | | SIB | 95 | 95 | 60 | 95 | 60 | 95 | 95 | 95 | 95 |
| | | | Polybutene | 5 | 5 | 40 | - | - | 5 | 5 | 5 | 5 |
| | | | Polyisobutylene | - | - | - | 5 | 40 | - | - | - | - |
| | | IIR (Chlorobutyl) | | - | - | - | - | - | - | - | | - |
| | | NR (Natural Rubber) | | - | - | - | - | - | - | - | | - |
| | | Filler | | - | - | - | - | - | - | - | | - |
| | Layer Thickness (mm) | IIR/NR/Filler Layer | | - | - | - | - | - | - | - | | - |
| | | First layer | (A)SIBS Layer | 0.40 | 0.40 | 0.40 | 0.40 | 0.40 | 0.40 | 0.40 | 0.40 | 0.40 |
| | | Second layer | (B)-1 SIS Layer | 0.10 | 0.10 | 0.10 | 0.10 | 0.10 | 0.10 | 0.10 | 0.10 | 0.10 |
| | | | (B)-2 SIB Layer | 0.10 | 0.10 | 0.10 | 0.10 | 0.10 | 0.10 | 0.10 | 0.10 | 0.10 |
| | Gs/Gb Ratio | | | 0.75 | 0.75 | 0.75 | 0.75 | 0.75 | 0.58 | 0.50 | 0.33 | 0.25 |
| | Gs | | (mm) | 0.45 | 0.45 | 0.45 | 0.45 | 0.45 | 0.35 | 0.30 | 0.20 | 0.15 |
| Performance Evaluation | Detachment Force | | Index | 106 | 108 | 108 | 108 | 108 | 106 | 106 | 106 | 106 |
| | Flection Fatigue Resistance | | Index | 108 | 102 | 106 | 101 | 107 | 108 | 108 | 108 | 108 |
| | Static Air Decreasing Ratio | | (%/Month) | 2.6 | 2.9 | 2.6 | 2.9 | 2.6 | 2.6 | 2.6 | 2.6 | 2.6 |
| | Cracking Resistance | | Index | 101 | 102 | 102 | 102 | 102 | 103 | 105 | 102 | 99 |

In each of Table 1C, Table 2C, and Table 3C, the thickness of each of the first layer and the second layer represents a thickness of a region other than Gs. Apart from comparative example 1C, in each of the examples and the comparative examples, Gb represents a total of the thickness of the first layer and the thickness of the second layer and is 0.6 mm.

(Comparative Example 1C)

For the inner liner of comparative example 1C, the following blending components were mixed using a Banbury mixer, and a sheet was formed therefrom using a calendering roll, thereby obtaining a polymer film having a thickness of 1.0 mm. The value of Gs/Gb was 1.

| | |
|---|---|
| IIR (Note 1) | 80 parts by mass |
| Natural rubber (Note 2) | 20 parts by mass |
| Filler (Note 3) | 60 parts by mass |

(Note 1) "Exxon chlorobutyl 1068" provided by Exxon Mobil Corporation was used for IIR.

(Note 2) TSR20 was used for the natural rubber.

(Note 3) For the filler, "SEAST V (N660; nitrogen adsorption specific surface area: $27m^2/g$)" provided by Tokai Carbon Co., Ltd was used.

(Comparative Examples 2C to 3C)

One SIBS layer having a thickness 0.6 mm and produced using the above-described method was used as the inner liner. The value of Gs/Gb was 1.

(Comparative Examples 4C to 9C)

A combined layer of an SIBS layer of 0.40 mm and an SIS layer of 0.20 mm was used as the inner liner. The value of Gs/Gb was 1 in comparative example 4, and was 0.75 in comparative examples 5 to 9. Here, more than 40 mass % of the C4 polymer was mixed in the first layer or the second layer of each of comparative examples 5C to 8C.

(Examples 1C to 10C)

In each of examples 1C to 10C, the SIBS was used for the first layer, and the SIS was used for the second layer. As the C4 polymer, 5 mass % or 40 mass % of polybutene or polyisobutylene was mixed therein. The value of Gs/Gb was 0.75 in each of examples 1C to 6C. The values thereof became smaller in the order from example 7C to example 1C.

(Comparative Example 10C and Examples 11C to 19C)

In each of comparative example 10C and examples 11C to 19C, the SIBS was used for the first layer and the SIB was used for the second layer. The value of Gs/Gb in example 11C was the largest, and the value thereof in example 19C was the smallest. The value of Gs/Gb in comparative example 10C was 1.

(Comparative Example 11C and Examples 20C to 28C)

In each of comparative example 11C and examples 20C to 28C, the SIBS was used for the first layer, and a combined layer of the SIS and the SIB was used for the second layer. In examples 20C to 24C, different types of C4 polymers were mixed in the first and second layers by different amounts. The value of Gs/Gb was 1 in comparative example 11C, and was 0.75 in each of examples 20C to 24C. The values of Gs/Gb in examples 25C to 28C were different from one another. The value thereof in example 25C was the largest and the value thereof in example 28C was the smallest.

<Result of Performance Evaluation>

In Tables 1C and 2C, each of examples 1C to 10C employed the polymer layer stack including the SIBS layer (thickness of 0.4 mm) serving as the first layer and the SIS layer (thickness of 0.2 mm) serving as the second layer. In the performance evaluation, these examples were comprehensively more excellent than comparative examples 1C to 9C, in terms of the detachment force, the flection fatigue resistance, the static air decreasing ratio, and the cracking resistance.

In Table 2C, each of examples 11C to 19C employed the polymer layer stack including the SIBS layer (thickness of 0.4 mm) serving as the first layer and the SIB layer (thickness of 0.2 mm) serving as the second layer. In the performance evaluation, these examples were comprehensively more excellent than comparative example 10C, in terms of the detachment force, the flection fatigue resistance, the static air decreasing ratio, and the cracking resistance.

In Table 3C, each of examples 20C to 28C employed the polymer layer stack including the SIBS layer (thickness of 0.4 mm) serving as the first layer as well as the SIB layer and the SIS layer both serving as the second layer (each having a thickness of 0.1 mm). In the performance evaluation, these examples were comprehensively more excellent than comparative example 11C, in terms of the detachment force, the flection fatigue resistance, the static air decreasing ratio, and the cracking resistance.

<Examples D>

In accordance with specifications shown in Table 1D, pneumatic tires of examples and comparative examples were produced and performances thereof were evaluated. The SIBS, the epoxidized SBS, and the blending components used for the first layer and the second layer are as follows.

(SIBS)

"SIBSTAR 102T (Shore A hardness: 25; the content of the styrene component: 15 mass %; weight average molecular weight: 100,000)" provided by Kaneka Corporation was used.

(Epoxidized SBS)

"Epofriend A1020" (the content of the styrene component: 30 mass %; weight average molecular weight: 100,000; epoxidation equivalent amount: 500) provided by Daicel Chemical Industries Ltd was used.

<Production of Pneumatic Tire>

The above-described SIBS and epoxidized SBS were pelletized using a biaxial extruder (screw diameter: ϕ50 mm; L/D: 30; cylinder temperature: 220°C). Thereafter, a polymer layer stack having an SIBS layer and an epoxidized SBS layer having respective thicknesses as shown in Table 1D was fabricated by coextrusion using a T die extruder (screw diameter: ϕ80 mm; L/D: 50; die lip width: 500 mm; cylinder temperature: 220°C).

For the pneumatic tire, a raw tire having the basic structure shown in Fig. 1 with the size of 195/65R15 was produced. Here, the epoxidized SBS of the polymer layer stack was disposed adjacent to the carcass ply inside the raw tire, and was subjected to press molding using a vulcanization mold at 170°C for 20 minutes, thereby producing a tire.

Here, in order to adjust the thickness of the inner liner for bead region Rb and buttress region Rs, a profile was provided at an extrusion opening for the polymer sheet, whereby a sheet in which thickness Gs of the buttress region was thinned was obtained in one piece. The sheet thus obtained was disposed on the tire inner surface as the inner liner.

[Table 1D]

| | | Comparative Examples | | | Examples | | | |
|---|---|---|---|---|---|---|---|---|
| | | 1D | 2D | 3D | 1D | 2D | 3D | 4D |
| IIR/NR/Filler Layer | (mm) | 1.00 | | | | | | |
| First Layer (SIBS Layer) (Note 1) | (mm) | | 0.60 | 0.40 | 0.40 | 0.40 | 0.40 | 0.40 |
| Second Layer (Epoxidized SBS Layer) (Note 2) | (mm) | | | 0.20 | 0.20 | 0.20 | 0.20 | 0.20 |
| Gs/Gb Ratio | (-) | 1.00 | 1.00 | 1.00 | 0.75 | 0.58 | 0.50 | 0.33 |
| Gs | (mm) | 1.00 | 0.60 | 0.60 | 0.45 | 0.35 | 0.30 | 0.20 |
| Detachment Force | (Index) | 100 | 60 | 100 | 100 | 100 | 100 | 100 |
| Flection Fatigue Resistance | (Index) | 100 | 110 | 103 | 103 | 103 | 103 | 103 |
| Static Air Decreasing Ratio | (%/Month) | 3.2 | 2.5 | 2.7 | 2.7 | 2.7 | 2.7 | 2.7 |
| Cracking Resistance | (Index) | 100 | 100 | 101 | 107 | 108 | 110 | 108 |

In Table 1D, a total of the thickness of the first layer and the thickness of the second layer represents average thickness Gb of bead region Rb. Apart from comparative example 1, average thickness Gb of bead region Rb was 0.6 mm in any of the examples and the comparative examples.

(Comparative Example 1D)

For the inner liner of comparative example 1D, the following blending components were mixed using a Banbury mixer, and a sheet was formed therefrom using a calendering roll, thereby obtaining a polymer film having a thickness of 1.0 mm. The value of Gs/Gb was 1.

| | |
|---|---|
| Chlorobutyl (Note 1) | 90 parts by mass |
| Natural rubber (Note 2) | 10 parts by mass |
| Filler (Note 3) | 50 parts by mass |

(Note 1) "Exxon chlorobutyl 1068" provided by Exxon Mobil Corporation

(Note 2) TSR20

(Note 3) "SEAST V" (N660; nitrogen adsorption specific surface area: 27 $m^2$/g) provided by Tokai Carbon Co., Ltd

(Comparative Example 2D)

The SIBS layer produced using the above-described method and having a thickness of 0.6 mm was used as the inner liner. The value of Gs/Gb was 1.

(Comparative Example 3D)

A combined layer of an SIBS layer of 0.40 mm and an epoxidized SBS layer of 0.20 mm was used as the inner liner. The value of Gs/Gb was 1.

(Examples 1D to 4D)

In each of examples 1D to 4D, the SIBS was used for the first layer, and the epoxidized SBS was used for the second layer. The value of Gs/Gb in example 1D was the largest, and the value of Gs/Gb in example 4D was the smallest.

<Result of Performance Evaluation>

Each of examples 1D to 4D in Table 1D employed the polymer layer stack including the SIBS layer (thickness of 0.4 mm) serving as the first layer and the epoxidized SBS layer (thickness of 0.2 mm) serving as the second layer. The value of Gs/Gb in example 1D was the largest, i.e., 0.75. The value of Gs/Gb in example 4D was the smallest, i.e., 0.33. The value of Gs/Gb in each of comparative examples 1D to 3D was 1. Each of the examples had an improved crack resistance index as compared with that of comparative example 1.

REFERENCE SIGNS LIST

1: pneumatic tire; 2: tread portion; 3: sidewall portion; 4: bead portion; 5: bead core; 6: carcass ply; 7: belt layer; 8: bead apex; 9: inner liner; Rb: bead region; Rs: buttress region; Le: tire maximum width position; Lt: bead toe; Lu: corresponding position of belt layer end.

## Claims

1. A pneumatic tire comprising an inner liner provided therein, wherein said inner liner is formed of at least one polymer sheet containing a styrene-isobutylene-styrene triblock copolymer, and an average thickness Gs of a buttress region Rs is smaller than an average thickness Gb of a bead region Rb, said buttress region Rs extending from a tire maximum width position to a corresponding position Lu of a belt layer end, said bead region Rb extending from the tire maximum width position to a bead toe.

2. A pneumatic tire comprising an inner liner provided therein, wherein said inner liner is formed of a polymer sheet composed of a polymer mixture containing 99.5 mass % to 60 mass % of a styrene-isobutylene-styrene triblock copolymer and 0.5 mass % to 40 mass % of a styrene-maleic anhydride copolymer, and a ratio (Gs/Gb) is 0.3 to 0.75 between an average thickness Gs of a buttress region Rs and an average thickness Gb of a bead region Rb, said buttress region Rs extending from a tire maximum width position to a corresponding position Lu of a belt layer end, said bead region Rb extending from the tire maximum width position to a bead toe.

3. The pneumatic tire according to claim 2, wherein said styrene-maleic anhydride copolymer contains a styrene component and a maleic anhydride component at a molar ratio of 50/50 to 90/10, has a weight average molecular weight of 4,000 to 20,000, and further includes a styrene-maleic anhydride copolymer base resin in which the maleic anhydride component has an acid value of 50 to 600.

4. The pneumatic tire according to any one of claims 2 and 3, wherein said styrene-maleic anhydride copolymer includes an ester resin of the styrene-maleic anhydride copolymer, said ester resin having a monoester group and a monocarboxylic acid group and obtained by esterification of said styrene-maleic anhydride copolymer base resin.

5. The pneumatic tire according to any one of claims 2 to 4, wherein said styrene-maleic anhydride copolymer includes

a styrene-maleic anhydride copolymer ammonium salt aqueous solution which is a solution containing ammonium salt of said styrene-maleic anhydride copolymer base resin.

**6.** A pneumatic tire comprising an inner liner provided therein, wherein said inner liner is formed of a polymer sheet of a thermoplastic elastomer composition containing 0.1 parts by mass to 100 parts by mass of a tackifier relative to 100 parts by mass of a styrene-isobutylene-styrene triblock copolymer, and a ratio (Gs/Gb) is 0.30 to 0.75 between an average thickness Gs of a buttress region Rs and an average thickness Gb of a bead region Rb in said inner liner, said buttress region Rs extending from a tire maximum width position to a corresponding position Lu of a belt layer end, said bead region Rb extending from the tire maximum width position to a bead toe.

**7.** The pneumatic tire according to claim 6, wherein said tackifier has a weight average molecular weight Mw of $1 \times 10^2$ to $1 \times 10^6$, and has a softening point falling within a range of 50°C to 150°C.

**8.** A pneumatic tire comprising an inner liner provided therein, wherein
said inner liner is formed of a polymer layer stack, said polymer layer stack including:

a first layer having a thickness of 0.05 mm to 0.6 mm and being a thermoplastic elastomer composition composed of a mixture of not less than 60 mass % of a styrene-isobutylene-styrene triblock copolymer and not more than 40 mass % of a C4 polymer, which is a polymer of monomers with carbon number 4; and
a second layer having a thickness of 0.01 mm to 0.3 mm and being a thermoplastic elastomer composition composed of a mixture of not less than 60 mass % of at least one of the styrene-isoprene-styrene triblock copolymer and a styrene-isobutylene diblock copolymer and not more than 40 mass % of said C4 polymer,
said second layer is disposed in contact with a rubber layer of a carcass ply, and
an average thickness Gs of a buttress region Rs is thinner than an average thickness Gb of a bead region Rb in said inner liner, said buttress region Rs extending from a tire maximum width position to a corresponding position Lu of a belt layer end, said bead region Rb extending from the tire maximum width position to a bead toe.

**9.** The pneumatic tire according to claim 8, wherein said C4 polymer is polybutene or polyisobutylene.

**10.** The pneumatic tire according to claim 9, wherein said C4 polymer has a number average molecular weight of 300 to 3,000, has a weight average molecular weight of 700 to 100,000, or has a viscosity average molecular weight of 20,000 to 70,000.

**11.** The pneumatic tire according to claim 8, wherein a ratio (Gs/Gb) is 0.30 to 0.75 between the average thickness Gs of the buttress region and the average thickness Gb of the bead region in said inner liner.

**12.** A pneumatic tire comprising an inner liner provided therein, wherein said inner liner is formed of a polymer layer stack including: a first layer having a thickness of 0.05 mm to 0.6 mm and composed of a thermoplastic elastomer composition containing a styrene-isobutylene-styrene triblock copolymer; and a second layer having a thickness of 0.01 mm to 0.3 mm and composed of a thermoplastic elastomer composition containing an epoxidized styrene-butadiene-styrene triblock copolymer, said second layer being disposed in contact with a rubber layer of a carcass ply, and
an average thickness Gs of a buttress region Rs is thinner than an average thickness Gb of a bead region Rb in said inner liner, said buttress region Rs extending from a tire maximum width position to a corresponding position Lu of a belt layer end, said bead region Rb extending from the tire maximum width position to a bead toe.

**13.** The pneumatic tire according to claim 12, wherein a ratio (Gs/Gb) is 0.3 to 0.75 between the average thickness Gs of the buttress region and the average thickness Gb of the bead region in said inner liner.

FIG.1

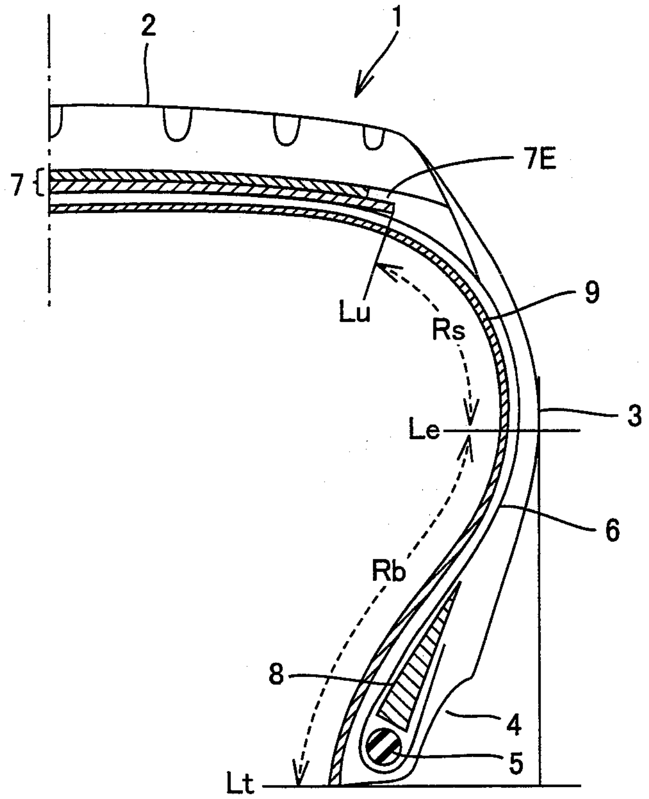


FIG.2

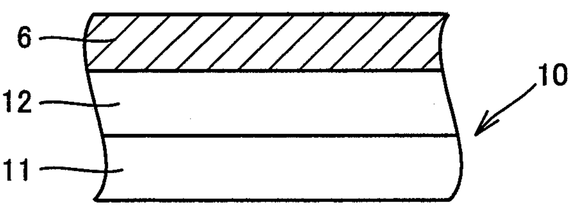

**INTERNATIONAL SEARCH REPORT**

International application No.
PCT/JP2012/055688

A. CLASSIFICATION OF SUBJECT MATTER
*B60C5/14*(2006.01)i

According to International Patent Classification (IPC) or to both national classification and IPC

B. FIELDS SEARCHED

Minimum documentation searched (classification system followed by classification symbols)
B60C5/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2011-074309 A (Sumitomo Rubber Industries, Ltd.), 14 April 2011 (14.04.2011), paragraphs [0016], [0018] to [0037], [0043] to [0044], [0057] to [0060] (Family: none) | 1-5 |
| Y | JP 2010-195969 A (Kaneka Corp.), 09 September 2010 (09.09.2010), paragraphs [0018] to [0025], [0038] (Family: none) | 1,6-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 June, 2012 (06.06.12) | 19 June, 2012 (19.06.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/055688

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-051320 A (Sumitomo Rubber Industries, Ltd.), 17 March 2011 (17.03.2011), paragraphs [0016], [0019] to [0037], [0046] to [0049], [0069] to [0070] & US 2011/0056604 A1 & EP 2298577 A1 & CN 102009511 A & KR 10-2011-0025597 A | 1,8-13 |
| Y | JP 2010-527839 A (Societe de Technologie Michelin), 19 August 2010 (19.08.2010), paragraphs [0002] to [0006], [0011] to [0012], [0018] to [0019], [0022] to [0025], [0027] & US 2010/0175804 A1 & EP 2152529 A & WO 2008/145276 A1 & FR 2916679 A1 & CN 101743135 A | 1,8-11 |
| Y | JP 2008-174037 A (The Yokohama Rubber Co., Ltd.), 31 July 2008 (31.07.2008), paragraphs [0006], [0008] to [0012]; fig. 1 (Family: none) | 1-13 |
| Y | WO 2006/121140 A1 (The Yokohama Rubber Co., Ltd.), 16 November 2006 (16.11.2006), paragraphs [0004] to [0005] & US 2009/0068476 A1 & EP 1880871 A1 & CN 101171146 A | 12-13 |
| A | JP 2005-103760 A (The Yokohama Rubber Co., Ltd.), 21 April 2005 (21.04.2005), paragraph [0009] & US 2007/0031661 A1 & EP 1666242 A1 & WO 2005/030479 A1 & CN 1856399 A | 6-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9019987 A
- JP 2999188 B
- JP 2008024219 A
- JP 2007291256 A
- JP 2008174037 A
- JP 62048704 A
- JP 6462308 B
- US 4946899 A
- US 5219948 A
- JP 3174403 A
- WO 2005033035 A